# EUROPÄISCHE PATENTSCHRIFT

(11) **EP 3 962 669 B1**
(45) Veröffentlichungstag und Bekanntmachung des Hinweises auf die Patenterteilung: **25.10.2023**
(21) Anmeldenummer: 20725632.2
(22) Anmeldetag: 28.04.2020
(51) Int. Cl.: B08B 3/02, B08B 5/02, B60S 1/48, B60S 1/54, G02B 27/00

(54) **REINIGUNGSVORRICHTUNG ZUM BEAUFSCHLAGEN EINER OBERFLÄCHE MIT EINEM MEDIUMSPULS NACH DEM VENTURI-PRINZIP, DRUCKLUFTSYSTEM, REINIGUNGSVERFAHREN, STEUERUNGSSYSTEM UND FAHRZEUG**
CLEANING DEVICE FOR APPLYING A MEDIA PULSE TO A SURFACE ACCORDING TO THE VENTURI PRINCIPLE, COMPRESSED-AIR SYSTEM, CLEANING METHOD, CONTROL SYSTEM AND VEHICLE
DISPOSITIF DE NETTOYAGE POUR APPLIQUER À UNE SURFACE UNE IMPULSION D'UN MILIEU SELON LE PRINCIPE DE VENTURI, SYSTÈME D'AIR COMPRIMÉ, PROCÉDÉ DE NETTOYAGE, SYSTÈME DE COMMANDE ET VÉHICULE

(30) Priorität: 03.05.2019 DE 102019111469
(43) Veröffentlichungstag der Anmeldung: 09.03.2022
(73) Patentinhaber: ZF CV Systems Europe BV, 1170 Brussels (BE)
(72) Erfinder: DIECKMANN, Thomas, 30982 Pattensen (DE); FIEBRANDT, Jan, 31812 Bad Pyrmont (DE); SCHÜNEMANN, Gerd, 30880 Laatzen (DE); COHRS, Jan, 30173 Hannover (DE)
(74) Vertreter: Rabe, Dirk-Heinrich
(86) Internationale Anmeldenummer: PCT/EP2020/061714
(87) Internationale Veröffentlichungsnummer: WO 2020/225022

(56) Entgegenhaltungen:
- CN-U- 201 454 425
- CN-U- 206 168 291
- DE-A1- 3 803 491
- DE-A1- 19 835 733
- US-A1- 2018 272 998
- US-A1- 2018 272 999

## Beschreibung

Die Erfindung betrifft eine Reinigungsvorrichtung gemäß dem Oberbegriff des Anspruchs 1 zum Abgeben eines gasförmigen Mediums, insbesondere Druckluft, und/oder eines Mediumsgemisches aus dem gasförmigen Medium und einem flüssigen Medium, insbesondere Wasser, vorzugsweise als eine Mediumssequenz. Die Erfindung betrifft auch ein Druckluftsystem, ein Reinigungsverfahren, ein Steuerungssystem und ein Fahrzeug mit einer solchen Reinigungsvorrichtung.

Eine Reinigungsvorrichtung der eingangs genannten Art, insbesondere zum Reinigen von Sensoren in Fahrzeugen, weist auf: ein Mischelement, einen ersten Zuführungsanschluss in einer Haupt-Mediumszuleitung zum Zuführen des gasförmigen Mediums zur Durchführung durch das Mischelement, und einen zweiten Zuführungsanschluss in einer Zweig-Mediumszuleitung zum Zuführen des flüssigen Mediums quer zur Durchführung in das Mischelement, und einen Abgabeanschluss zum Abgeben des gasförmigen Mediums und/oder des Mediumsgemisches, sowie einen Druckraum an der Haupt-Mediumszuleitung.

Eine solche eingangs genannte Reinigungsvorrichtung für Teile eines Kraftfahrzeugs ist in DE 198 35 733 A1 beschrieben. Dabei ist vorgesehen, das Teil des Kraftfahrzeugs mit einem Druckluft-Flüssigkeit-Gemisch zu beaufschlagen, wobei ein Kompressor Druckluft für einen Zwischendruckbehälter mit Ventil bereitstellt. Sobald Druckluft aus diesem in Richtung eines Düsenkopfes strömt, entsteht durch die Strömungsgeschwindigkeit der Druckluft in einem weiteren, die Flüssigkeit haltenden Behälter mit Ventil, ein Unterdruck. Durch diesen Unterdruck wird dann gemäß dem Venturi-Prinzip die Flüssigkeit aus diesem Behälter angesaugt und mit der Druckluft vermischt. Das auf diese Weise gebildete Druckluft-Flüssigkeit-Gemisch tritt dann aus der Düse aus und trifft unter Druck auf die zu reinigende Oberfläche. Insbesondere ist in DE 198 35 733 A1 vorgesehen, dass durch Betätigen des nicht näher spezifizierten Ventils des Zwischendruckbehälters das als Rückschlagventil ausgebildete Absperrventil des Flüssigkeitsbehälters selbsttätig geöffnet wird, sobald Druckluft zur Düse strömt. DE 38 03 491 A1 offenbart eine Reinigungsvorrichtung gemäß dem Oberbegriff des Anspruchs 1 und betrifft ein Verfahren zum Reinigen der Frontscheibe von Kraftfahrzeugen, bei welchen wenigstens ein Reinigungsflüssigkeitsstrahl auf die Scheibe gespritzt und mittels einer Wischeinrichtung verteilt und weggewischt wird. US 2018/0272998 A1 offenbart ebenfalls eine Reinigungsvorrichtung. Hierbei umfasst das System eine Düse, die auf ein Sensorfenster gerichtet ist, und ein Venturiventil mit einem Auslass, der mit der Düse verbunden ist. Das Venturiventil ist mit einem Fluideinlassventil und einer Luftquelle verbunden.

Die Konzepte sind noch verbesserungswürdig, insbesondere hinsichtlich der Steuerabhängigkeit der Reinigungsvorrichtung von einem Absperrventil des Flüssigkeitsbehälters und dem damit einhergehenden erhöhten apparativen und somit wartungstechnischen Aufwand. Das Konzept ist zudem verbesserungswürdig hinsichtlich des Flüssigkeitsbedarfs der Reinigungsvorrichtung. Wünschenswert ist es, eine zuverlässige und gründliche Reinigung zu gewährleisten, insbesondere unter relativ geringem, insbesondere apparativen, Aufwand. Weiterhin ist ein geringer Verbrauch von Energie und Reinigungsmedien wünschenswert, sowie ein robuster, insbesondere möglichst wartungsarmer, Aufbau.

An dieser Stelle setzt die Erfindung an, deren Aufgabe es ist, in verbesserter Weise eine Reinigungsvorrichtung anzugeben, welche die oben genannten Probleme zumindest teilweise adressiert bzw. behebt. Insbesondere soll ein hohes Maß an Zuverlässigkeit und Gründlichkeit bei der Reinigung erreicht werden, und der apparative Aufwand sowie der Aufwand hinsichtlich der Wartung einer Reinigungsvorrichtung reduziert werden. Auch soll ein relativ geringer Verbrauch von Energie und Reinigungsmedien erreicht werden.

Die Aufgabe, betreffend die Reinigungsvorrichtung, wird durch die Erfindung mit einer Reinigungsvorrichtung des Anspruchs 1 gelöst.

Die Erfindung geht aus von einer Reinigungsvorrichtung gemäß dem Oberbegriff des Anspruchs 1 der eingangs genannten Art, nämlich zum Abgeben eines gasförmigen Mediums, insbesondere Druckluft, und/oder eines Mediumsgemisches aus dem gasförmigen Medium und einem flüssigen Medium, insbesondere Wasser, vorzugsweise als eine Mediumssequenz.

Die eingangs genannte Reinigungsvorrichtung weist auf:
- ein Mischelement, vorzugsweise Venturi-Mischelement,
   - mit einem ersten Zuführungsanschluss in einer Haupt-Mediumszuleitung zum Zuführen des gasförmigen Mediums zur Durchführung durch das Mischelement,
   - einem zweiten Zuführungsanschluss in einer Zweig-Mediumszuleitung zum Zuführen des flüssigen Mediums quer zur Durchführung in das Mischelement, und
   - einen Abgabeanschluss zum Abgeben des gasförmigen Mediums und/oder des Mediumsgemisches, und
- einen Druckraum an der Haupt-Mediumszuleitung.

Bei dieser Reinigungsvorrichtung ist erfindungsgemäß vorgesehen, dass
- ein Schaltventil in der Haupt-Mediumszuleitung angeordnet ist, das ausgebildet ist, eine Durchführung des gasförmigen Mediums durch das Mischelement in einem ersten Schaltzustand zu unterbinden und in einem zweiten Schaltzustand zuzulassen, wobei
- das Schaltventil in der Haupt-Mediumszuleitung stromabwärts des oder an dem Druckraum angeordnet ist, und das Schaltventil als ein 3/2-Wegeventil oder als ein Doppel-Rückschlagventil gebildet ist, und optional--
- eine Reguliereinrichtung, nämlich eine Dosier- und/oder Steuereinrichtung, in der Zweig-Mediumszuleitung angeordnet ist, die ausgebildet ist, eine Zuführung des flüssigen Mediums, insbesondere unabhängig vom Schaltventil, zu regulieren.

Erfindungsgemäß ist weiter optional
--für den Fall, dass die Reinigungsvorrichtung das Schaltventil und die Reguliereinrichtung umfasst-- vorgesehen, dass
   - für einen zweiten Schaltzustand des Schaltventils in der Haupt-Mediumszuleitung, in dem eine Durchführung des gasförmigen Mediums durch das Mischelement zugelassen ist:
   - die Reguliereinrichtung in der Zweig-Mediumszuleitung in einem ersten Zustand eine Zuführung des flüssigen Mediums unterbindet, wobei
   - das gasförmige Medium am Abgabeanschluss ansteht derart, dass dieser ausschließlich mit dem gasförmigen Medium beaufschlagbar ist, und
   - die Reguliereinrichtung in der Zweig-Mediumszuleitung in einem zweiten Zustand eine Zuführung des flüssigen Mediums zulässt, und
   - das gasförmige Medium am Abgabeanschluss ansteht und das flüssige Medium am zweiten Zuführungsanschluss ansaugbar ist, um den Abgabeanschluss mit dem Mediumsgemisch zu beaufschlagen.

Die Erfindung geht von der Überlegung aus, dass es vorteilhaft ist, den Aufwand bei der Reinigung von Oberflächen, insbesondere den apparativen Aufwand und den Verbrauch von Energie und Reinigungsmedien möglichst gering zu halten, ohne dabei jedoch die Reinigungswirkung einzuschränken. Dies trifft insbesondere auf die Reinigung von Oberflächen eines Sensors oder einer Sensorabdeckung zu, für die eine saubere Oberfläche eine Voraussetzung für die ordnungsgemäße und zuverlässige Funktionsweise des Sensors ist.

Die Erfindung hat erkannt, dass es dazu vorteilhaft ist, das Schaltventil in der Haupt-Mediumszuleitung stromabwärts des oder an dem Druckraum als ein 3/2-Wegeventil oder als ein Doppel-Rückschlagventil auszubilden. Dadurch lässt sich der Druckraum an der Haupt-Mediumszuleitung besonders vorteilhaft mit dem Mischelement verbinden, entweder zur Durchführung des gasförmigen Mediums durch das Mischelement oder zur Unterbindung der Durchführung.

Das Schaltventil kann jeweils einen Mediumsquellenanschluss und einen Mischelementanschluss in der Haupt-Mediumszuleitung aufweisen. Das in dem Druckraum vorgehaltene gasförmige Medium lässt sich so vergleichsweise einfach schalten unter vergleichsweise vorteilhafter Ausbildung einer Druckamplitude. Eine Reinigung von Oberflächen wird so auch nur mit dem gasförmigen Medium besonders vorteilhaft möglich. Dieser Vorteil gilt vor allem für eine erste Variante der Erfindung, in welcher das Schaltventil in der Haupt-Mediumszuleitung allein vorgesehen ist, d. h. in Form eines 3/2-Wegeventils oder Doppel-Rückschlagventils, ohne dass die Reguliereinrichtung in der Zweig-Mediumszuleitung vorhanden ist oder erforderlich wäre. Insbesondere hat die Erfindung erkannt, dass vorteilhafterweise eine zusätzliche Fluidpumpe für das flüssige Medium, insbesondere Wasser, überflüssig wird.

Das Schaltventil in Form eines 3/2-Wegeventils oder Doppel-Rückschlagventil eignet sich auch in einer Funktion als ein Druckraumanschlussventil. Das Schaltventil in Form eines Doppel-Rückschlagventil lässt sich zudem vergleichsweise schnell und einfach schalten. Das Schaltventil in Form eines 3/2-Wegeventils oder Doppel-Rückschlagventil lässt sich zudem besonders vorteilhaft als ein Druckraumanschlussventil nutzen. Das Schaltventil in Form eines 3/2-Wegeventils lässt sich erfindungsgemäß als ein Überbrückungs-Ventil nutzen, insbesondere mit einem Überbrückungsanschluss zum Überbrücken des Mischelements, wobei der Überbrückungsanschluss direkt an dem Abgabeanschluss angeschlossen ist.

Es wurde darüber hinaus vorteilhafterweise erkannt, dass eine zusätzliche Fluidpumpe für das flüssige Medium, insbesondere Wasser, auch dann überflüssig wird, für den Fall, dass erfindungsgemäß eine Reguliereinrichtung vorgesehen ist. Erfindungsgemäß ist für einen zweiten Schaltzustand des Schaltventils in der Haupt-Mediumszuleitung, in dem eine Durchführung des gasförmigen Mediums durch das Mischelement zugelassen ist vorgesehen, dass:
- die Reguliereinrichtung in der Zweig-Mediumszuleitung in einem ersten Zustand eine Zuführung des flüssigen Mediums unterbindet, wobei
- das gasförmige Medium am Abgabeanschluss ansteht derart, dass dieser ausschließlich mit dem gasförmigen Medium beaufschlagbar ist, und
- die Reguliereinrichtung in der Zweig-Mediumszuleitung in einem zweiten Zustand eine Zuführung des flüssigen Mediums zulässt, wobei
- das gasförmige Medium am Abgabeanschluss ansteht und das flüssige Medium am zweiten Zuführungsanschluss ansaugbar ist, um den Abgabeanschluss mit dem Mediumsgemisch zu beaufschlagen.

Insofern ist vorgesehen, dass im zweiten Schaltzustand des Ventils das gasförmige Medium das Mischelement, vorteilhaft Venturi-Mischelement, durchströmt und am Abgabeanschluss mit Vorteil allein ansteht. Vorteilhaft ist also vorgesehen, dass das Mischelement ein Venturi-Mischelement ist; über eine Venturi-Düse lässt sich ein Unterdruck im Mischelement besonders effizient zur Ansaugung des flüssigen Mediums umsetzen und --soweit dies nicht sein sollte-- wird die Druckamplitude vorteilhaft unterstützt.

Im Ergebnis wird somit gegenüber dem Stand der Technik in besonders vorteilhafte Weise eine Reduktion des apparativen Aufwandes und ein verringerter Verbrauch von Energie und Reinigungsmedien, insbesondere des flüssigen Mediums erzielt. Damit einher geht eine Reduktion der Fehleranfälligkeit der Reinigungsvorrichtung, was zu reduzierten Wartungsintervallen und in der Konsequenz zu einer erhöhten Verfügbarkeit der Reinigungsvorrichtung führt.

Dieser Vorteil gilt vor allem für eine erste Variante der Erfindung, in welcher das Schaltventil in der Haupt-Mediumszuleitung allein vorgesehen ist, d. h. in Form eines 3/2-Wegeventils oder Doppel-Rückschlagventils, ohne dass die Reguliereinrichtung in der Zweig-Mediumszuleitung vorhanden ist oder erforderlich wäre.

Dieser Vorteil gilt auch für eine zweite Variante der Erfindung, in welcher das Schaltventil --d. h. in Form eines 3/2-Wegeventils oder Doppel-Rückschlagventils-- in Kombination mit einer Reguliereinrichtung in der Zweig-Mediumszuleitung vorgesehen ist, nämlich die Reguliereinrichtung in der Zweig-Mediumszuleitung als eine Dosier- und/oder Steuereinrichtung ausgebildet.

Das Durchströmen des Mischelements erzeugt in jedem Fall --vorzugsweise in dem Mischelement unter Ausnutzung des Venturi-Effekts, einen Unterdruck, wobei dieser Unterdruck das flüssige Medium am zweiten Zuführungsanschluss ansaugen kann, soweit Bedarf besteht. Anschließend wird das flüssige Medium mit dem gasförmigen Medium im Mischelement, insbesondere Venturi-Mischelement, vermischt. Somit wird in dem Mischelement ein Mediumsgemisch erzeugt. Der Abgabeanschluss ist in der Folge somit mit dem Mediumsgemisch beaufschlagt, ohne das eine zusätzliche Pumpe das flüssige Medium zum Venturi-Mischelement fördern müsste.

Darüber hinaus ist aber die Reguliereinrichtung in der Zweig-Mediumszuleitung ausgebildet, eine Zuführung des flüssigen Mediums, insbesondere unabhängig vom Schaltventil, zu regulieren; nämlich die Reguliereinrichtung in der Zweig-Mediumszuleitung ist als eine Dosier- und/oder Steuereinrichtung ausgebildet. Dadurch lässt sich die Menge des zuzugebenden flüssigen Mediums dosieren und/oder steuern. So kann die Dosier- und/oder Steuereinrichtung mit besonderem Vorteil in Form eines 2/2-Wegeventils oder einer Kombination aus einer Drossel und einem Zwischenspeicher gebildet sein.

Das Dosieren und Steuern der Menge des zuzugebenden flüssigen Mediums unabhängig vom Schaltventil kann bei einem 2/2-Wegeventil über dessen Ansteuerzeiten erfolgen. Das Dosieren der Menge des zuzugebenden flüssigen Mediums unabhängig vom Schaltventil kann bei der Kombination aus einer Drossel und einem Zwischenspeicher mittels des Zwischenspeichers erfolgen und das Steuern kann mittels der ggfs. einstellbaren Drossel erfolgen.

Die Erfindung bezieht sich mit dem Merkmal eines Schaltventils als ein 3/2-Wegeventil oder als ein Doppel-Rückschlagventil in der Haupt-Mediumszuleitung und/oder einer Reguliereinrichtung, nämlich eine Dosier-und/oder Steuereinrichtung, in der Zweig-Mediumszuleitung insofern insbesondere auf zwei Varianten, nämlich:
- in der ersten Variante nur auf das Merkmal des Schaltventils als ein 3/2-Wegeventil oder als ein Doppel-Rückschlagventil,
- in der zweiten Variante auf das Merkmal des Schaltventils als ein 3/2-Wegeventil oder als ein Doppel-Rückschlagventil in Kombination mit der Reguliereinrichtung, nämlich der Dosier- und/oder Steuereinrichtung.

In dieser Weiterbildung umfasst die Erfindung insofern insbesondere das Schaltventil und die optionale Reguliereinrichtung -, also nur die vorgenannten zwei Varianten: entweder nur das Schaltventil oder das Schaltventil in Kombination mit der Reguliereinrichtung.

Gleichwohl ist auch die Variante nur der Reguliereinrichtung ohne das Schaltventil ebenfalls möglich.

Die Erfindung führt zur Lösung der Aufgabe auch auf ein Druckluftsystem des Anspruchs 18. Das erfindungsgemäße Druckluftsystem weist auf: mindestens einen Sensor eines Sensorsystems, wobei der Sensor, insbesondere eine transparente Abdeckung des Sensors, eine Oberfläche aufweist.

Weiter weist das Druckluftsystem, mindestens eine Reinigungsvorrichtung gemäß dem Konzept der Erfindung auf.

Dabei ist erfindungsgemäß vorgesehen, dass
- eine erste Mediumsquelle des Druckluftsystems über die Haupt-Mediumszuleitung mit dem Mediumsquellenanschluss des Schaltventils verbindbar ist, und
- eine zweite Mediumsquelle des Druckluftsystems über die Zweig-Mediumszuleitung mit dem Mediumsquellenanschluss der Reguliereinrichtung und/oder mit dem zweiten Zuführungsanschuss des Mischelements verbindbar ist, und
- mindestens eine Sprühdüse über eine Sprühdüsenzuleitung mit dem Abgabeanschluss verbindbar ist.

Bei dem erfindungsgemäßen Druckluftsystem werden die Vorteile die sich aus der Reinigungsvorrichtung ergeben auf ein Druckluftsystem übertragen. Insbesondere ist der geringere apparative Aufwand durch Wegfall der sonst zusätzlich benötigten Fluidpumpe und die geringere Abhängigkeit von mechanischen bewegten Teilen vorteilhaft für Anwendungen in Fahrzeugen und dergleichen, insbesondere mobilen, Maschinen. Auch wirken sich bei einem Einsatz des erfindungsgemäßen Druckluftsystems in einem Fahrzeug der geringere Verbrauch von Energie und Reinigungsmedien vorteilhaft aus, da Energie und Reinigungsmedien in Fahrzeugen und vergleichbaren mobilen Systemen nur begrenzt vorhanden sind. Auch ist in einem Fahrzeug der Aspekt einer zuverlässigen Reinigung wichtig, da zu reinigende Sensoren häufig kritische und sicherheitsrelevante Aufgaben übernehmen.

Die Erfindung führt zur Lösung der Aufgabe auch auf ein Reinigungsverfahren gemäß dem Anspruch 23, d. h. zum Reinigen einer Oberfläche mit einer Reinigungsvorrichtung nach einem der Ansprüche 1 bis 17, insbesondere einem Druckluftsystem nach einem der Ansprüche 18 bis 21.

Auf das Reinigungsverfahren werden die Vorteile der Reinigungsvorrichtung übertragen.

Die Erfindung führt zur Lösung der Aufgabe zudem auf ein Steuerungssystem des Anspruchs 28. Das Steuerungssystem weist vorteilhaft eine Steuer-und/oder Regeleinrichtung auf, wobei die Steuer- und/oder Regeleinrichtung ausgebildet ist, die Schritte des erfindungsgemäßen Reinigungsverfahrens durchzuführen. Auf das Steuerungssystem werden die Vorteile des Reinigungsverfahrens und der Reinigungsvorrichtung übertragen.

Die Erfindung führt zur Lösung der Aufgabe auch auf ein Fahrzeug des Anspruchs 29, insbesondere mit einem erfindungsgemäßen Druckluftsystem und mit einem erfindungsgemäßen Steuerungssystem, wobei eine Pneumatikanlage zur Versorgung der ersten Mediumsquelle mit dem gasförmigen Medium an das Druckluftsystem angeschlossen ist und, eine Scheibenreinigungsanlage zur Versorgung der zweiten Mediumsquelle mit dem flüssigen Medium an das Druckluftsystem angeschlossen ist.

Beim erfindungsgemäßen Fahrzeug werden die Vorteile des Druckluftsystems und des Steuerungssystems, analog auf ein korrespondierendes Fahrzeug vorteilhaft übertragen. Erfindungsgemäß ergibt sich bei dem Fahrzeug insbesondere der Vorteil, dass auf zusätzliche Fluidtanks für die Druckluft und das Wasser verzichtet werden kann. Dies reduziert vorteilhafterweise den apparativen Aufwand und somit die Fehleranfälligkeit des Systems und in der Folge ebenfalls die Kosten.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Das Verfahren weist in einer Weiterbildung vorteilhaft die Schritte auf:
- Ansteuern des Schaltventils des Druckluftsystems und Leiten von Druckluft aus wahlweise der ersten Mediumsquelle oder dem Druckraum an die Reinigungsvorrichtung,
- Betreiben des Schaltventils der Reinigungsvorrichtung im ersten Schaltzustand, in dem eine Durchführung des gasförmigen Mediums durch das Mischelement unterbunden ist, und wobei die Reguliereinrichtung in der Zweig-Mediumszuleitung in einem ersten Zustand eine Zuführung des flüssigen Mediums unterbindet,
- Beaufschlagen des Abgabeanschlusses mit dem gasförmigen Medium und Leiten des gasförmigen Medium vom Abgabeanschlusses an die mindestens eine Sprühdüse,
- Beaufschlagen der Oberfläche, insbesondere impulsartig, mit nur dem gasförmigen Medium.

Das Verfahren weist in einer Weiterbildung vorteilhaft die Schritte auf:
- selektives Umschalten des Schaltventils der Reinigungsvorrichtung in den zweiten Schaltzustand, insbesondere zwischen dem ersten und dem zweiten Schaltzustand, in dem eine Durchführung des gasförmigen Mediums durch das Mischelement zugelassen ist, wobei die Reguliereinrichtung in der Zweig-Mediumszuleitung in einem zweiten Zustand eine Zuführung des flüssigen Mediums zulässt,
- Ansaugen des flüssigen Medium am zweiten Zuführungsanschluss der Reinigungsvorrichtung, vorzugsweise durch das Venturi-Prinzip,
- Vermischen des ersten und des zweiten Mediums im Venturi-Mischelement zu einem Mediumsgemisch,
- Beaufschlagen des Abgabeanschlusses mit dem Mediumsgemisch und Leiten des Mediumsgemisches vom Abgabeanschluss an die mindestens eine Sprühdüse,
- Beaufschlagen der Oberfläche, insbesondere impulsartig, mit dem Mediumsgemisch.

Insbesondere kann nach dem selektiven Umschalten des Schaltventils der Reinigungsvorrichtung in den ersten Schaltzustand vorgesehen sein:
- Ansteuern der Reguliereinrichtung, wobei die Reguliereinrichtung in der Zweig-Mediumszuleitung in einem ersten Zustand eine Zuführung des flüssigen Mediums unterbindet und/oder in einem zweiten Zustand eine Zuführung des flüssigen Mediums zulässt. Vorzugsweise kann das Reinigen einer Oberfläche zeitlich gesteuert, insbesondere abwechselnd und/oder intermittierend, erfolgen.

Vorteilhaft kann das Reinigen einer Oberfläche zeitlich gesteuert, insbesondere abwechselnd und/oder intermittierend, erfolgen. Insbesondere ist vorgesehen, dass die Reinigungsvorrichtung ausgebildet ist, das gasförmige Medium, insbesondere Druckluft, und das Mediumsgemisch als eine Mediumssequenz alternierend abzugeben. Konkret bedeutet dies, dass die Beaufschlagung der zu reinigenden Oberfläche alternierend beispielsweise mit einer Sequenz aus gasförmigen Medium, dem Mediumsgemisch und wieder gefolgt von dem gasförmigen Medium erfolgen kann.

Diese Sequenz ermöglicht auf vorteilhafte Weise eine effektive Entfernung von Schmutzpartikel, die der Oberfläche anhaften können. Beispielsweise könnte ein erstes Beaufschlagen mit Druckluft vorhandene Verschmutzungen anlösen, ein nachfolgendes Beaufschlagen mit dem Mediumsgemisch könnte die vorhandene Verschmutzung aufweichen und ein abschließendes Beaufschlagen mit wiederum Druckluft die Verschmutzung beseitigen und die Oberfläche trocknen.

Vorteilhaft ist zudem vorgesehen, dass die Zusammensetzung und Abfolge der Mediumssequenz zeitlich, insbesondere selektiv und/oder intermittierend, steuerbar ist. Dies kann konkret insbesondere durch ein Ansteuern des Schaltventils und/oder der Reguliereinrichtung erfolgen. Durch eine zeitlich gesteuerte Beaufschlagung kann vorteilhaft in Abhängigkeit von Verschmutzungsgrad, Umgebungsbedingungen und Betriebsparametern eine optimale Reinigung der Oberfläche erreicht werden. Selektiv bedeutet insbesondere, dass zu einem Zeitpunkt immer nur entweder das gasförmige Mediums oder das Mediumsgemisch auf die Oberfläche beaufschlagt wird. Zwischen den Beaufschlagungen können, insbesondere auch innerhalb einer Mediumssequenz, definierte Pausen liegen, beispielsweise um Dreckpartikel einzuweichen. Intermittierend bedeutet weiter insbesondere, dass die jeweiligen Mediumsströme, insbesondere die Ströme des gasförmigen Mediums und des mehrphasigen Mediumsgemisches, jeweils ausgelöst und unterbrochen werden können. Alternativ ist es aber auch möglich, die Zusammensetzung und Abfolge der Mediumssequenz von einem detektierten Verschmutzungsgrad der zu reinigenden Oberfläche abhängig zu machen.

Insbesondere ist vorgesehen, dass die Reinigungsvorrichtung ausgebildet ist, den Anteil des flüssigen Mediums, insbesondere Wasser, im Mediumsgemisch zu regulieren. Konkret bedeutet dies, dass der Anteil des flüssigen Mediums am Mediumsgemisch über den in dem Venturi-Mischelement erzeugten Unterdruck einstellbar ist. Der erzielte Unterdruck im Venturi-Mischelement ist dabei beispielsweise über die Gestaltung der Querschnitte des Venturi-Mischelements, insbesondere Eintrittsquerschnitt, engster Querschnitt und Austrittsquerschnitt, aber auch über die vorherrschende Druckdifferenz zwischen Mischelement-Eintritt und -Austritt, das heißt, über die Strömungsgeschwindigkeit das gasförmigen Mediums durch das Mischelement, auf einfache Weise einstellbar.

Vorteilhafterweise ist es insbesondere denkbar, dass der Anteil des flüssigen Mediums, insbesondere Wasser, im Mediumsgemisch als ein prozentualer Anteil angebbar ist, beispielsweise durch eine Korrelation der Durchströmgeschwindigkeit des gasförmigen Mediums mit dem geförderten flüssigen Medium und anschließender Skalierung auf eine Prozentskala. Somit wäre der Anteil des flüssigen Mediums am Mediumsgemisch auf einfache Weise steuerungstechnisch handhabbar.

Vorteilhaft ist zudem vorgesehen, dass das flüssige Medium, insbesondere Wasser, durch das Venturi-Prinzip aus einer Mediumsquelle förderbar ist. Konkret bedeutet dies, dass das flüssige Medium aus einer Mediumsquelle mittels des Venturi-Effekts in die Venturi-Mischkammer gefördert wird. Fließt durch das Venturi-Mischelement ein Medium, so ist an der engsten Stelle des Mischelements der dynamische Druck, das heißt, der Staudruck, maximal und der statische Druck minimal. Die Geschwindigkeit des fließenden Mediums steigt im Verhältnis der Querschnitte beim Durchströmen des eingeschnürten Teils an, da aufgrund der Massenerhaltung überall dieselbe Mediumsmenge durchfließt. Gleichzeitig sinkt der Druck im fließenden Medium. Damit entsteht ein Differenzdruck, der dann wiederum zum Ansaugen des flüssigen Mediums benutzt wird. Somit kann auf vorteilhafte Weise auf eine zusätzliche Pumpe für das flüssige Medium verzichtet werden, der apparative Aufwand der Reinigungsvorrichtung sinkt in der Folge.

Weiterbildend ist vorgesehen, dass im zweiten Schaltzustand des Schaltventils ausschließlich das gasförmige Medium, insbesondere Druckluft, abgebbar ist. Konkret bedeutet dies, dass die Reinigungsvorrichtung zu reinigende Oberflächen zuvorderst mit einem Druckluftpuls beaufschlagt. Dieses Vorgehen begründet sich daraus, dass Druckluft durch einen Kompressor oder dergleichen Luftverdichter bereitstellbar ist. Das flüssige Medium ist insbesondere bei mobilen Anwendungen nur in begrenztem Umfang verfügbar. Aus diesem Grund wird in einem ersten Schritt vorteilhaft zunächst versucht, die Verschmutzung mittels einer Anzahl an Druckluftpulsen zu lösen. Das flüssige Medium wird ggfs. bzw. nur im Bedarfsfall beigemischt. Somit ergibt sich der Vorteil einer besonders sparsamen Reinigung der Oberfläche.

Dazu ist vorgesehen, dass für einen zweiten Schaltzustand des Schaltventils in der Haupt-Mediumszuleitung, in dem eine Durchführung des gasförmigen Mediums durch das Mischelement zugelassen ist:
- die Reguliereinrichtung in der Zweig-Mediumszuleitung in einem ersten Zustand eine Zuführung des flüssigen Mediums unterbindet, wobei das gasförmige Medium am Abgabeanschluss ansteht derart, dass dieser ausschließlich mit dem gasförmigen Medium beaufschlagbar ist.

Insofern ist lediglich darüber hinaus vorgesehen, dass
- die Reguliereinrichtung in der Zweig-Mediumszuleitung in einem zweiten Zustand eine Zuführung des flüssigen Mediums zulässt, wobei
- im zweiten Schaltzustand das gasförmige Medium am Abgabeanschluss ansteht und das flüssige Medium am zweiten Zuführungsanschluss ansaugbar ist, um den Abgabeanschluss mit dem Mediumsgemisch zu beaufschlagen.

Insbesondere ist zudem vorgesehen, dass das gasförmige Medium, insbesondere Druckluft, und/oder das Mediumsgemisch aus dem gasförmigen Medium und dem flüssigen Medium, insbesondere Wasser, impulsartig abgebbar ist; d. h. insbesondere in der Art einer oder mehrerer Pulse, das heißt, impulsartig. Dies führt zu einer hohen Reinigungswirkung.

Der Begriff "impulsartig" bezeichnet im Zusammenhang der Erfindung weiter eine plötzlich, ruckartige Beaufschlagung einer Oberfläche mit einem Medium, deren Impuls insbesondere geeignet ist, auf der Oberfläche befindliche Partikel, insbesondere Dreckpartikel, mechanisch zu lösen und zu entfernen. Bei einem plötzlichen, ruckartigen Beaufschlagen einer Oberfläche mit einem Medium, ist deren Impuls insbesondere geeignet, auf der Oberfläche befindliche Partikel, insbesondere Dreckpartikel, mechanisch zu lösen und zu entfernen. Generell wird dabei die Reinigungswirkung des Impulses unter anderem durch eine relativ hohe Masse des Mediums, eine relativ hohe Aufprallgeschwindigkeit des Mediums auf die Oberfläche und ein relativ schnelles Auslösen der Beaufschlagung vorteilhaft erhöht. Ein schnelles Auslösen der Beaufschlagung führt - insbesondere im Gegensatz zu einer langsam kontinuierlich ansteigenden Strömung des Mediums - zu einem Auftreffen insbesondere einer begrenzten, in einem Speicher gespeicherten Luftmasse auf die Oberfläche in einem relativ kurzen Zeitraum. Somit wird vorteilhaft ein hoher Impuls erreicht.

Insbesondere ist vorgesehen, dass der Abgabeanschluss zum Abgeben des gasförmigen Mediums und/oder des Mediumsgemisches der einzige Abgabeanschluss ist. Vorteilhaft ist, dass die Beaufschlagung einer zu reinigenden Fläche mit einer Mediumssequenz, insbesondere einer Abfolge von mindestens selektiv gesteuerten und in einem Strahl auf die Oberfläche geleiteten gasförmigen Medium beziehungsweise eines Mediumsgemisches aus einem gasförmigen und einem flüssigen Medium vorteilhaft ist. Der Begriff "selektiv gesteuert" meint hier, eine wechselseitige Abfolge eines Beaufschlagens mit einem oder mehreren Druckluftpulsen, gefolgt von einem selektiven Beaufschlagen mit einem oder mehreren Pulsen eines Mediumsgemisches aus beispielsweise Wasser und Druckluft.

Vorteilhaft ist vorgesehen, dass das Schaltventil in der Haupt-Mediumszuleitung, zwischen einer ersten Mediumsquelle und dem ersten Zuführungsanschluss des Mischelements angeordnet ist. Insbesondere ist vorgesehen, dass das Schaltventil in der Haupt-Mediumszuleitung, stromabwärts eines Druckbegrenzungsventils angeordnet ist. Vorzugsweise ist zwischen dem Druckbegrenzungsventil und dem Schaltventil ein Druckentlüftungsventil, insbesondere in Form eines 3/2-Wegeventils, angeordnet. Dadurch lassen sich je nach Ausbildung eines Schaltventils unterschiedlich jeweils anwendungsbezogen vorteilhafte Mediumsquellen für Druckluft mit einer Druckbegrenzung und optional einer Entlüftung, insbesondere im Falle eines Schaltventils oder Druckraum-Anschlussventils in Form eines Doppelrückschlagventils bilden.

Im Rahmen einer besonders bevorzugten Weiterbildung ist vorgesehen, dass die Reguliereinrichtung in der Zweig-Mediumszuleitung als eine Dosier- und Steuereinrichtung ausgebildet ist, welche das flüssige Medium dosiert und steuert. Insbesondere ist dazu vorteilhaft vorgesehen, dass die Dosier- und Steuereinrichtung ausgebildet ist:
- mit einer Steuereinrichtung, insbesondere in Form einer, optional einstellbaren, Drossel, und einer Dosiereinrichtung, insbesondere in Form eines Zwischenspeichers, und/oder
- mit einem 2/2-Wege-Ventil.

Diese Weiterbildungen einer Dosier- und Steuereinrichtung erweisen sich als vergleichsweise einfach und vorteilhaft zur Umsetzung einer Dosierung und Steuerung des flüssigen Mediums unabhängig vom Schaltzustand des Schaltventils.

Vorteilhaft ist vorgesehen, dass der Druckraum in einer ersten abgewandelten Weiterbildung direkt an einem Druckraumanschluss des Schaltventils angeschlossen ist. Das Schaltventil ist dazu insbesondere als ein Doppel-Rückschlagventil oder ein 3/2-Wegeventil gebildet. Das Schaltventil übernimmt damit mit besonderem Vorteil versehen auch die Funktion eines Druckraum-Anschlussventils.

Vorteilhaft ist vorgesehen, dass der Druckraum in einer zweiten abgewandelten Weiterbildung über ein Druckraum-Anschlussventil an einem Mediumsquellenanschluss des Schaltventils, insbesondere des Schaltventils in Form eines 3/2-Wegeventils, angeschlossen ist.

Diese zweite abgewandelte Weiterbildung erweist sich als besonders vorteilhaft für den Fall, dass das Schaltventil als ein Überbrückungsventil gebildet ist mit einem Anschluss an eine Bypassleitung zur Überbrückung des Mischelements. Erfindungsgemäß ist vorgesehen, dass das Schaltventil als ein Überbrückungs-Ventil ausgebildet ist, mit einem Überbrückungsanschluss, zum Überbrücken des Mischelements, wobei der Überbrückungsanschluss direkt an dem Abgabeanschluss angeschlossen ist.

Vorteilhaft ist vorgesehen, dass --insbesondere im Falle der ersten bzw. zweiten abgewandelten Weiterbildung-- die erste Mediumsquelle über die Haupt-Mediumszuleitung an einem Mediumsquellenanschluss des Druckraum-Anschlussventils angeschlossen ist bzw. (also und/oder) an einem Mediumsquellenanschluss des Schaltventils angeschlossen ist.

Insbesondere hat es sich als vorteilhaft erwiesen, dass das Schaltventil als ein Magnetventil in der Haupt-Mediumszuleitung ausgebildet ist, nämlich als das 3/2-Wegeventil oder das Doppel-Rückschlagventil, wobei das 3/2-Wegeventil oder das Doppel-Rückschlagventil jeweils einen Mediumsquellenanschluss und einen Mischelementanschluss in der Haupt-Mediumszuleitung aufweisen.

Vorteilhaft ist vorgesehen, dass die Reinigungsvorrichtung eine Heizeinrichtung aufweist, die ausgebildet ist, das gasförmige und/oder das flüssige Medium relativ zu einer Umgebungstemperatur zu wärmen, insbesondere vorzuwärmen. Konkret ist vorgesehen, dass es insbesondere in kalten Jahreszeiten vorteilhaft ist, das Medium mit dem die Oberfläche beaufschlagt wird, vorzuwärmen. Bei den während dieser Jahreszeiten zu lösenden Verschmutzungen handelt es sich insbesondere um ein Schnee- beziehungsweise Eis-Dreckpartikel-Gemisch, welches auf vorteilhafte Weise mittels Beaufschlagung durch vorgewärmte Medien, insbesondere ein vorgewärmtes flüssiges Medium, gelöst wird. Bei mobilen Anwendungen bietet sich zur Vorwärmung des insbesondere flüssigen Mediums vorteilhafterweise die Nutzung der Abwärme eines Motors oder dergleichen Brennkraftmaschine an. Somit wird im Ergebnis die Reinigungswirkung der Reinigungsvorrichtung insbesondere während kalter Jahreszeiten erhöht.

Insbesondere ist zudem vorgesehen, dass die Reinigungsvorrichtung eine Zusatzeinrichtung aufweist, mittels der wenigstens das zweite Medium mit einem Reinigungsmittel, insbesondere einer Reinigungsflüssigkeit, versetzbar ist. Denkbar ist aber auch der ersetzende und/oder ergänzende Zusatz eines Frostschutzmittels. Hierdurch wird auf vorteilhafte Weise die Reinigungswirkung des zweiten Mediums, insbesondere Wasser, erhöht. Beispielsweise ist es denkbar, dass ölbehaftete Verunreinigungen die zu beaufschlagende Oberfläche benetzen. Wasser alleine hätte in dieser Situation eine deutlich geringere Reinigungswirkung als ein Gemisch aus Wasser und einem Reinigungsmittel, insbesondere einem fett- und öllösenden Reinigungsmittel. Zudem verhindert ein Versetzen des flüssigen Mediums mit einem Frostschutzmittel ein Einfrieren der Reinigungsvorrichtung bei tiefen Temperaturen. Somit bleibt die Reinigungsvorrichtung auch im Winter einsetzbar.

Weiterbildend ist vorgesehen, dass das Schaltventil in der Haupt-Mediumszuleitung, zwischen einer ersten Mediumsquelle und dem ersten Zuführungsanschluss, angeordnet ist, und das Schaltventil einen ersten und einen zweiten Schaltzustand aufweist.

In dem zweiten Schaltzustand ist das Schaltventil über einen Mischelementanschluss, insbesondere Venturi-Mischelementanschluss, mit dem ersten Zuführungsanschluss verbindbar.

Erfindungsgemäß ist das Schaltventil außerdem in dem ersten Schaltzustand über einen Überbrückungsanschluss direkt mit dem Abgabeanschluss und über einen Mediumsquellenanschluss mit der ersten Mediumsquelle verbindbar. Vorteilhaft ist die erste Mediumsquelle im ersten Schaltzustand mit dem Überbrückungsanschluss und im zweiten Schaltzustand mit dem ersten Zuführungsanschluss verbindbar ist, wobei im ersten Schaltzustand das gasförmige Medium am Abgabeanschluss ansteht und der Abgabeanschluss ausschließlich mit dem gasförmigen Medium beaufschlagbar ist, und im zweiten Schaltzustand das flüssige Medium am zweiten Zuführungsanschluss ansaugbar ist, um den Abgabeanschluss mit dem Mediumsgemisch zu beaufschlagen.

Insbesondere ist vorgesehen, dass das Schaltventil im ersten Schaltzustand das Venturi-Mischelement überbrückt und/oder das erste Medium direkt am Abgabeanschluss bereitstellt. Mit anderen Worten: anders als für einen zweiten Schaltzustand des Schaltventils in der Haupt-Mediumszuleitung, in dem eine Durchführung des gasförmigen Mediums durch das Mischelement zugelassen ist, ist für einen ersten Schaltzustand des Schaltventils in der Haupt-Mediumszuleitung, eine Durchführung des gasförmigen Mediums durch das Mischelement nicht zugelassen.

Insbesondere kann dies bedeuten, dass das Schaltventil zwischen der ersten Mediumsquelle und dem ersten Zuführungsanschluss des Venturi-Mischelements angeordnet ist. Im ersten Schaltzustand des Schaltventils stellt das Schaltventil eine Verbindung direkt her zwischen der ersten Mediumsquelle und dem Abgabeanschluss der Reinigungsvorrichtung, das Venturi-Mischelement wird dabei somit überbrückt.

Im zweiten Schaltzustand des Schaltventils stellt das Schaltventil vorteilhaft eine Verbindung her zwischen der ersten Mediumsquelle und dem ersten Zuführungsanschluss des Venturi-Mischelements her. Dabei wird das gasförmige Medium durch das Venturi-Mischelement zum Abgabeanschluss der Reinigungsvorrichtung geleitet. Das Durchleiten des gasförmigen Mediums bewirkt aufgrund des Venturi-Prinzips ein Ansaugen des flüssigen Mediums am zweiten Zuführungsanschluss des Venturi-Mischelements und führt somit zu einer Erzeugung eines Mediumsgemisches innerhalb des Venturi-Mischelements.

Das Ansaugen des flüssigen Mediums erfolgt vorteilhaft bedarfsgerecht, das heißt, für den Fall, dass eine Reinigung der Oberfläche mittels Beaufschlagung mit einer Anzahl an Druckluftpulsen erfolglos blieb - in dem Fall schaltet das Schaltventil in den zweiten Schaltzustand. Vorteilhaft lässt die Reguliereinrichtung in der Zweig-Mediumszuleitung in einem zweiten Zustand eine Zuführung des flüssigen Mediums zu, wobei das gasförmige Medium am Abgabeanschluss ansteht und das flüssige Medium am zweiten Zuführungsanschluss ansaugbar ist, um den Abgabeanschluss mit dem Mediumsgemisch zu beaufschlagen.

Eine zusätzliche Fluidpumpe ist dadurch überflüssig und somit ergibt sich der Vorteil eines verringerten apparativen Aufwands. Zudem reduziert ein bedarfsgerechtes Beaufschlagen der Oberfläche mit dem Mediumsgemisch auf vorteilhafte Weise den Verbrauch des flüssigen Mediums. Dies ist insbesondere bei mobilen Anwendungen vorteilhaft, da hier der Vorrat an flüssigen Medium in der Regel sehr begrenzt ist.

Vorteilhaft ist zudem vorgesehen, dass das Schaltventil ein 3/2 Wegeventil ist. Konkret bedeutet dies, dass das Schaltventil vorteilhafterweise als ein 3/2 Wege Magnetventil ausgebildet ist. Somit ist das Schaltventil auf einfache Weise steuer- und regelungstechnisch handhabbar. Der steuer- und regelungstechnische Aufwand wird in der Folge vorteilhaft reduziert.

Weiterbildend ist zudem vorgesehen, dass die Reguliereinrichtung in der Zweig-Mediumszuleitung zwischen einer zweiten Mediumsquelle und dem zweiten Zuführungsanschluss, angeordnet ist.

Vorteilhaft ist die Reguliereinrichtung über einen Venturi-Mischelementanschluss mit dem zweiten Zuführungsanschluss und über einen Mediumsquellenanschluss mit der zweiten Mediumsquelle verbindbar, und das die Reguliereinrichtung weist einen ersten und einen zweiten Zustand auf, wobei die zweite Mediumsquelle im ersten Zustand von dem zweiten Zuführungsanschluss abtrennbar ist und im zweiten Zustand mit dem zweiten Zuführungsanschluss verbindbar ist. Insbesondere ist die Reinigungsvorrichtung ausgebildet, im zweiten Zustand das flüssige Medium am zweiten Zuführungsanschluss anzusaugen und den Abgabeanschluss mit dem Mediumsgemisch zu beaufschlagen.

Die Reguliereinrichtung ist vorteilhaft zwischen der zweiten Mediumsquelle und dem zweiten Zuführungsanschluss des Venturi-Mischelements angeordnet. Im zweiten Schaltzustand des Schaltventils stellt die Reguliereinrichtung in der Zweig-Mediumszuleitung in einem zweiten Zustand eine Verbindung her zwischen der zweiten Mediumsquelle und dem zweiten Zuführungsanschluss des Venturi-Mischelements. Erfolgt eine Leitung des gasförmigen Mediums durch das Venturi-Mischelement zum Abgabeanschluss der Reinigungsvorrichtung, bewirkt das Venturi-Prinzip ein Ansaugen des flüssigen Mediums am zweiten Zuführungsanschluss des Venturi-Mischelements und führt somit zu einer Erzeugung eines Mediumsgemisches innerhalb des Venturi-Mischelements.

Eine zusätzliche Fluidpumpe ist dadurch überflüssig und somit ergibt sich der Vorteil eines verringerten apparativen Aufwands. Zudem reduziert ein bedarfsgerechtes Beaufschlagen der Oberfläche mit dem Mediumsgemisch auf vorteilhafte Weise den Verbrauch des flüssigen Mediums. Dies ist insbesondere bei mobilen Anwendungen vorteilhaft, wo der Vorrat an flüssigen Medium begrenzt ist. Im ersten Zustand der Reguliereinrichtung sperrt die Reguliereinrichtung die Verbindung zwischen der zweiten Mediumsquelle und dem zweiten Zuführungsanschluss. Die Reinigungsvorrichtung ist in diesem Schaltzustand ausgebildet die Oberfläche ausschließlich mit Druckluft zu beaufschlagen, insbesondere nur mit Druckluft-Pulsen. Dies ist insbesondere der Fall, wenn das Schaltventil, das in der Haupt-Mediumszuleitung angeordnet ist, eine Durchführung des gasförmigen Mediums durch das Mischelement in einem ersten Schaltzustand unterbindet und das gasförmige Medium direkt am Abgabeanschluss ansteht oder ausgebildet ist, eine Durchführung des gasförmigen Mediums durch das Mischelement zugelassen ist.

Vorteilhaft ist vorgesehen, dass die Reguliereinrichtung insbesondere ein 2/2 Wegeventil ist. Die Reguliereinrichtung ist vorteilhafterweise als ein Magnetventil ausgebildet. Somit ist die Reguliereinrichtung auf einfache Weise steuer- und regelungstechnisch handhabbar. Der steuer- und regelungstechnische Aufwand wird in der Folge vorteilhaft reduziert.

In einer bevorzugten Weiterbildung der Druckluftanlage ist vorgesehen, dass die mindestens eine Sprühdüse mit einer gemeinsamen Auslassöffnung für das erste Medium und das Mediumsgemisch ausgebildet ist.

Insbesondere ist vorgesehen, dass die erste Mediumsquelle als eine Druckluftquelle, insbesondere als ein Kompressor, und die zweite Mediumsquelle als ein Fluidtank, insbesondere als ein Wassertank, ausgebildet ist. Die Druckluftanlage kann in dieser Weiterbildung vorteilhaft in ein Fahrzeug oder dergleichen mobiles System integriert werden, da ein Fahrzeug in der Regel bereits einen Kompressor sowie einen Wassertank aufweist. Konstruktive Änderungen am Fahrzeug oder einem dergleichen mobilen System sind somit auf ein geringes Maß reduziert - eine Reinigungsvorrichtung lässt sich vergleichsweise einfach nachrüsten.

Vorteilhaft ist vorgesehen, dass die zweite Mediumsquelle, insbesondere der Wassertank, räumlich unterhalb des Venturi-Mischelementes angeordnet ist. Ein Ansaugen des flüssigen Mediums erfordert somit nur ein Überwinden der auf das flüssige Medium wirkenden Schwerkraft. Vorteilhafterweise erfolgt das Ansaugen mittels des Venturi-Prinzips, somit entfällt der Bedarf an einer weiteren Fluidpumpe, der apparative Aufwand wird somit vorteilhaft reduziert. Zudem kann der Wassertank somit an einer fahrdynamisch günstigeren Stelle angeordnet werden, das heißt, möglichst nahe am Fahrzeugschwerpunkt.

Weiterbildend ist vorgesehen, dass die erste Mediumsquelle einem anderen Primärzweck dient, insbesondere der Versorgung einer Luftfederanlage oder dergleichen Pneumatikanlage. In dieser Weiterbildung kann vorteilhaft eine bereits vorhandene Mediumsquelle, insbesondere Druckluftquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

Vorteilhaft ist vorgesehen, dass die zweite Mediumsquelle einem anderen Primärzweck dient, insbesondere der Versorgung einer Scheibenreinigungsanlage oder dergleichen Reinigungsanlage. In einer derartigen Weiterbildung kann vorteilhaft eine bereits vorhandene Mediumsquelle, insbesondere Flüssigkeits-und/oder Reinigungsmittelquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

Insbesondere ist vorgesehen, dass das Schaltventil des Druckluftsystems insbesondere als ein Doppelrückschlagventil ausgebildet ist.

In einer Weiterbildung ist vorgesehen, dass das Schaltventil und/oder ein Druckraum-Anschlussventil des Druckluftsystems als ein 3/2-Wegeventil und/oder Doppelrückschlagventil ausgebildet ist; insbesondere in Kombination mit einem Schnellentlüftungsventil oder dergleichen Ventil. Dies bedeutet, dass das Schaltventil und/oder ein Druckraum-Anschlussventil als ein Magnetventil ausgebildet sein kann, wobei diese Ventilart insbesondere steuer- und/oder regelungstechnisch einfach zu handhaben ist. Ein Doppelrückschlagventil beziehungsweise ein Schnellentlüftungsventil erweist sich als mechanisch robust und kann insbesondere vorteilhaft, ohne externes Steuer- und/oder Regelsignal betreibbar sein; vorteilhaft leicht anpassbar sein an die Einsatzbedingungen.

In einer bevorzugten Weiterbildung der Druckluftanlage ist vorgesehen, dass der Sensor ein optischer Sensor, insbesondere ein Umgebungserfassungssensor ist, beispielsweise ein LIDAR-Sensor, ein Radar-Sensor, eine Kamera oder dergleichen Sensor ist. Die Reinigungsvorrichtung verbessert insbesondere die regelmäßige Reinigung der Sensoroberfläche und damit die Funktionsweise des Sensors , insbesondere, da die optischen Eigenschaften des Sensors von der Transparenz und/oder Transluzenz der Sensoroberfläche abhängen.

In einer Weiterbildung des Reinigungsverfahrens ist vorgesehen, dass das Reinigen einer Oberfläche zeitlich gesteuert, insbesondere abwechselnd und/oder intermittierend, erfolgt. Somit ergibt sich der Vorteil, dass hierbei eine individuelle, das heißt, beispielsweise dem Verschmutzungsgrad der Oberfläche angepasste, Sequenz an Druckluftpulsen und Mediumsgemischpulsen generiert werden kann. Zudem ist es denkbar, den zeitlichen Abstand zwischen den einzelnen Pulsen auf vorteilhafte Weise anzupassen. Beispielsweise könnte zuerst ein Reinigungsversuch mittels Druckluftpuls versucht werden und, sofern dies unzureichend sein sollte, anschließend ein Anlösen der Verschmutzung mittels Mediumsgemischpuls unternommen werden, gefolgt von einer hinreichend langen Einwirkzeit des Mediumsgemisches auf die Verschmutzung mit abschließender Beseitigung der Verschmutzung mittels nachfolgendem Druckluftpuls oder Sequenz an Druckluftpulsen.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: eine erste bevorzugte Ausführungsform einer Reinigungsvorrichtung, wobei ein Schaltventil in der Haupt-Mediumszuleitung angeordnet ist und/oder eine Reguliereinrichtung in der Zweig-Mediumszuleitung, nämlich eine Dosier- und/oder Steuereinrichtung, in der Zweig-Mediumszuleitung angeordnet ist,
- Fig. 2A: eine zweite bevorzugte Ausführungsform der Reinigungsvorrichtung, wobei ein Schaltventil in der Haupt-Mediumszuleitung angeordnet ist und an eine Bypassleitung zum Mischelement angeschlossen ist, und/oder eine Reguliereinrichtung in der Zweig-Mediumszuleitung, nämlich eine Dosier- und/oder Steuereinrichtung, in der Zweig-Mediumszuleitung angeordnet ist,
- Fig. 2B: eine Variante der ersten bevorzugten Ausführungsform der Reinigungsvorrichtung wie in Fig. 1, wobei die Reguliereinrichtung in der Zweig-Mediumszuleitung als 2/2-Wegeventil gebildet ist,
- Fig. 2C: eine erfindungsgemäße Ausführungsform der Reinigungsvorrichtung wie in Fig. 2 wobei das Schaltventil in der Haupt-Mediumszuleitung stromabwärts eines Druckraum-Anschlussventils angeordnet ist und wobei eine Heiz- und Zusatzeinrichtung in der Zweig-Mediumszuleitung vorgesehen ist und die Reguliereinrichtung in der Zweig-Mediumszuleitung nicht vorgesehen ist,
- Fig. 2D: eine weitere Variante der ersten Ausführungsform der Reinigungseinrichtung wie in Fig. 1, wobei die Reguliereinrichtung in der Zweig-Mediumszuleitung mit einem Zwischenspeicher und einer Drossel in der Zweig-Mediumszuleitung gebildet ist,
- Fig. 2E: ein Detail Y in einer ersten Version (I) und einer zweiten Version (II) für die erste bevorzugte Ausführungsform einer Reinigungsvorrichtung, nämlich insbesondere für Ausführungsformen der Fig. 1, Fig. 2B, Fig. 2D sowie m.E. auch für eine zweite Ausführungsform einer Reinigungsvorrichtung, nämlich insbesondere für Ausführungsformen der Fig. 2C,
- Fig. 3A: eine Abwandlung zur ersten bevorzugten Ausführungsform der Reinigungseinrichtung der Fig. 1, wobei das Schaltventil in der Haupt-Mediumszuleitung angeordnet ist und die Reguliereinrichtung, nämlich eine Dosier- und/oder Steuereinrichtung, in der Zweig-Mediumszuleitung angeordnet ist, wobei das Schaltventil als 3/2-Wegeventil und die Reguliereinrichtung als 2/2-Wegeventil gebildet ist,
- Fig. 3B: eine erfindungsgemäße Abwandlung zur zweiten Ausführungsform der Fig. 2C mit einem Druckraum-Anschlussventil in der Version (I) des Details Y (in der Fig. 2E) ohne eine Reguliereinrichtung in der Zweig-Mediumszuleitung,
- Fig. 3C: eine Abwandlung zur ersten Ausführungsform der Fig. 2B, wobei gemäß der Version (II) des Details Y (in der Fig. 2E) das Schaltventil als Doppelrückschlagventil gebildet ist,
- Fig. 3D: eine erfindungsgemäße Abwandlung zur Ausführungsform der Fig. 2C mit einem Druckraum-Anschlussventil in der Version (II) des Details Y (in der Fig. 2E) ohne eine Reguliereinrichtung in der Zweig-Mediumszuleitung,
- Fig. 3E: eine erste Version einer Mediumsquelle gemäß einem Detail X1 mit einem Kompressor als Druckluftquelle, einem Druckbegrenzungsventil DBV und einem 3/2-Wege Magnetventil als Druckentlüftungsventil DEV,
- Fig. 3F: eine zweite Version einer Mediumsquelle gemäß einem Detail X2 mit einem Kompressor als Druckluftquelle und einem Druckbegrenzungsventil DBV, insbesondere nur einem Druckbegrenzungsventil DBV,
- Fig. 4: ein Ablaufschema für eine bevorzugte Ausführungsform eines Reinigungsverfahren,
- Fig. 5: eine Reinigungsvorrichtung in der Ausführungsform der Fig. 3C, mit einer schematischen Darstellung eines Steuerungssystems für ein beispielhaftes Druckluftsystem,
- Fig. 6: eine schematische Darstellung eines Fahrzeugs mit einem Druckluftsystem und einem Steuerungssystem und einer Reinigungsvorrichtung gemäß dem Konzept der Erfindung.

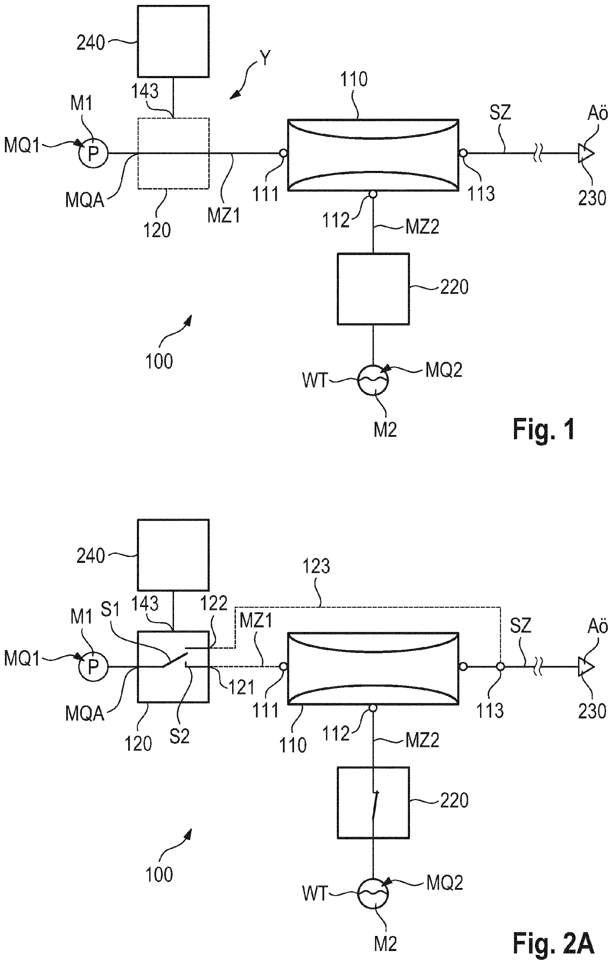

Fig. 1 zeigt eine erste bevorzugte Ausführungsform einer Reinigungsvorrichtung, wobei ein Schaltventil 120 in der Haupt-Mediumszuleitung MZ1 angeordnet ist und/oder eine Reguliereinrichtung 220 in der Zweig-Mediumszuleitung MZ2, nämlich allgemein eine Dosier- und/oder Steuereinrichtung, in der Zweig-Mediumszuleitung MZ2 angeordnet ist. Dazu zeigt Fig. 1 die schematische Ansicht der ersten Ausführungsform der Reinigungsvorrichtung 100 zum Abgeben eines gasförmigen Mediums M1, insbesondere Druckluft DL, und/oder eines Mediumsgemisches MG aus dem gasförmigen Medium M1 und einem flüssigen Medium M2, insbesondere Wasser, vorzugsweise als eine Mediumssequenz MS, aus einer Sprühdüse 230 an einer Sprühdüsenzuleitung SZ. Dabei stellt vorliegend eine an die Haupt-Mediumszuleitung MZ1 angeschlossene erste Mediumsquelle MQ1 einen Druck P zur Verfügung. Insbesondere kann der Druck P über einen Kompressor K für das gasförmige Medium M1 bereitgestellt werden. Vorliegend ist dafür ein Druckraum 240 an der Haupt-Mediumszuleitung MZ1 angeschlossen.

Weiter zeigt Fig. 1 ein Mischelement 110, vorzugsweise insbesondere ein Venturi-Mischelement, mit einem ersten Zuführungsanschluss 111 in der Haupt-Mediumszuleitung MZ1 zum Zuführen des gasförmigen Mediums M1 zur Durchführung durch das Mischelement 110, einem zweiten Zuführungsanschluss 112 in der Zweig-Mediumszuleitung MZ2 zum Zuführen des flüssigen Mediums M2 quer zur Durchführung in das Mischelement 110 und einen Abgabeanschluss 113 zum Abgeben des gasförmigen Mediums M1 und/oder Mediumsgemisches MG an die Sprühdüsenzuleitung SZ zur Sprühdüse 230.

Das vorliegend in der Haupt-Mediumszuleitung MZ1 angeordnete Schaltventil 120 ist insbesondere ausgebildet beispielsweise als ein Magnetventil MV, insbesondere als ein 3/2-Wegeventil. Das Schaltventil 120 kann auch ausgebildet sein als ein Doppel-Rückschlagventil. Das Schaltventil 120, insbesondere das 3/2-Wegeventil oder das Doppel-Rückschlagventil, weist jeweils einen Mediumsquellenanschluss MQA und einen Mischelementanschluss 121 in der Haupt-Mediumszuleitung MZ1 auf.

Eine zweite an eine Zweig-Mediumszuleitung MZ2 angeschlossene Mediumsquelle MQ2, insbesondere ein Wassertank WT, kann das flüssige Medium M2 bereitstellen.

Vorliegend ist bei der ersten Ausführungsform in einer ersten Variante zusätzlich zum Schaltventil 120 eine Reguliereinrichtung 220 angeordnet in der; diese ist hierbei bevorzugt als eine Dosier- und/oder Steuereinrichtung ausgebildet zur Regulierung der Zuführung des flüssigen Mediums M2 insbesondere unabhängig vom Schaltventil 120.

Vorgesehen ist, dass die Reguliereinrichtung 220 in der Zweig-Mediumszuleitung MZ2 in einem ersten Zustand eine Zuführung des flüssigen Mediums M2 unterbindet. Somit steht das das Mischelement 110 durchströmende, gasförmige Medium M1 am Abgabeanschluss 113 an, derart, dass dieser ausschließlich mit dem ersten, gasförmigen Medium M1 beaufschlagbar ist. In einem zweiten Zustand der Reguliereinrichtung 220 lässt diese eine Zuführung des flüssigen Mediums M2 zu, wobei somit das gasförmige Medium M1 am Abgabeanschluss 113 ansteht und das flüssige Medium M2 am zweiten Zuführungsanschluss 112 angesaugt wird. In der Folge wird der Abgabeanschluss 113 mit einem Mediumsgemisch MG aus gasförmigem und flüssigem Medium M1/M2 beaufschlagt.

Das Ansaugen des flüssigen Mediums M2 am Zuführungsanschluss 112 erfolgt hierbei mittels des Venturi-Prinzips, das heißt, das Durchströmen des vorzugsweise als Venturi-Mischelement ausgebildeten Mischelements 110 erzeugt in diesem einen Unterdruck, welcher wiederum zu einem selbsttätigen Ansaugen des flüssigen Mediums M2 führt.

Insofern kann in einer anderen, zweiten Variante, die Reguliereinrichtung 220 auch entfallen und nur Schaltventil 120 in der Haupt-Mediumszuleitung MZ1 vorgesehen sein und das Ansaugen des flüssigen Mediums M2 am Zuführungsanschluss 112 erfolgt gleichwohl mittels des Venturi-Prinzips, wobei in geeigneter Weise eine Zuführung des flüssigen Mediums M1 zum Mischelement 110 zuzulassen ist.

In einer anderen, dritten Variante, kann das Schaltventil 120 in der Haupt-Mediumszuleitung MZ1 entfallen und nur die Reguliereinrichtung 220 in der Zweig-Mediumszuleitung MZ2 vorgesehen sein; insofern ist in geeigneter Weise eine Durchführung des gasförmigen Mediums M1 durch das Mischelement 110 zuzulassen und das Ansaugen des flüssigen Mediums M2 am Zuführungsanschluss 112 erfolgt gleichwohl mittels des Venturi-Prinzips, auch ohne das Schaltventil 120.

In der allgemeinen Ausführungsform der Fig. 1 ist vorliegend allerdings ein Schaltventil 120 in der Haupt-Mediumszuleitung MZ1 angeordnet, das ausgebildet ist, eine Durchführung des gasförmigen Mediums M1 durch das Mischelement 110 in einem ersten Schaltzustand S1 zu unterbinden und in einem zweiten Schaltzustand S2 zuzulassen. Die beiden Schaltzustände S1/S2 sind in Fig. 1 nicht explizit gezeigt und können insofern in zweckdienlicher Weise ausgeführt werden; einige bevorzugte Ausführungsbeispiele sind mit den folgenden Figuren erläutert.

Fig. 2A zeigt eine zweite bevorzugte Ausführungsform der Reinigungsvorrichtung, wobei ein Schaltventil in der Haupt-Mediumszuleitung angeordnet ist und an eine Bypassleitung 123 zum Mischelement 110 angeschlossen ist, und/oder eine Reguliereinrichtung 220 in der Zweig-Mediumszuleitung MZ2, nämlich eine Dosier- und/oder Steuereinrichtung, in der Zweig-Mediumszuleitung MZ2 angeordnet ist. Dazu zeigt Fig. 2A die schematische Ansicht einer allgemeinen Ausführungsform der Reinigungsvorrichtung 100 zum Reinigen einer Oberfläche O mit vorzugsweise einer Mediumssequenz MS aus einem gasförmigen Medium M1 und, bedarfsweise, einem Mediumsgemisch MG aus dem gasförmigen Medium M1 und einem flüssigen Medium M2.

Insbesondere hier ist eine eingezeichnete Reguliereinrichtung 220 nicht zwingend erforderlich; es ist also die andere, zweite Variante des Konzepts der Erfindung zu bevorzugen, gemäß der die Reguliereinrichtung 220 auch entfallen kann und nur das Schaltventil 120 in der Haupt-Mediumszuleitung MZ1 vorgesehen ist. Es kann aber gleichwohl vorteilhaft sein, dass die Mischkammer 110 bei geschlossener Regulierungseinrichtung 220 (d. h. ohne Durchfluss, nämlich ohne Wasserdurchfluss) trocknet, damit nicht die Gefahr einer Vereisung besteht. Das wiederum spricht dafür die erste Variante des Konzepts der Erfindung zu bevorzugen, da dann mit der Reguliereinrichtung 220 in einem ersten Zustand in der Zweig-Mediumszuleitung MZ2 eine Zuführung des flüssigen Mediums M2 unterbunden werden kann.

Es stellt vorliegend eine an eine erste Mediumszuleitung MZ1 angeschlossene erste Mediumsquelle MQ1, insbesondere ein Kompressor K, das gasförmige Medium M1 bereit, und eine zweite an eine zweite Mediumszuleitung MZ2 angeschlossene Mediumsquelle MQ2, insbesondere ein Wassertank WT, das flüssige Medium M2 bereit.

Weiter zeigt auch Fig. 2A ein (Venturi-)Mischelement 110 mit einem ersten Zuführungsanschluss 111 zum Anbinden der ersten Mediumsquelle MQ1, einem zweiten Zuführungsanschluss 112 zum Anbinden der zweiten Mediumsquelle MQ2 sowie einem Abgabeanschluss 113. Über den Abgabeanschluss 113 gelangt weiterhin das gasförmige Medium M1 beziehungsweise das Mediumsgemisch MG an eine Sprühdüse zum Beaufschlagen einer Oberfläche O.

Das Schaltventil 120 befindet sich bei der bevorzugten zweiten Ausführungsform in der Haupt-Mediumszuleitung MZ1 und eine Reguliereinrichtung 220 in der Zweig-Mediumszuleitung MZ2. Das Schaltventil 120 ist erfindungsgemäß als ein Überbrückungs-Ventil ausgebildet, nämlich mit einem Überbrückungsanschluss 122 zum Überbrücken des Mischelements 110, wobei der Überbrückungsanschluss 122 direkt an dem Abgabeanschluss 113 des Mischelements 110 angeschlossen ist. Das Schaltventil 120 weist auch einen Mischelementanschluss 121 zum Mischelement 110 auf. In der zweiten bevorzugten Ausführungsform ist das Schaltventil 120 angeordnet in der Haupt-Mediumszuleitung MZ1 zwischen der ersten Mediumsquelle MQ1 und dem Venturi-Mischelement 110. Es weist das Schaltventil 120 einen ersten Schaltzustand S1 und einen zweiten Schaltzustand S2 auf.

Im ersten Schaltzustand S1 überbrückt das Schaltventil 120 das Venturi-Mischelement 110 und beaufschlagt den Abgabeanschluss 113 ausschließlich mit dem gasförmigen Medium M1. Im zweiten Schaltzustand S2 leitet das Schaltventil 120 das gasförmige Medium M1 durch das Venturi-Mischelement 110. In der Folge entsteht im Venturi-Mischelement 110 aufgrund des Venturi-Prinzips ein Unterdruck, somit wird das flüssige Medium M2 am zweiten Zuführungsanschluss 112 des Venturi-Mischelements 110 aus der zweiten Mediumsquelle MQ2 angesaugt. Somit wird ohne eine zusätzliche Fluidpumpe ein zweiphasiges Mediumsgemisch MG erzeugt innerhalb des Venturi-Mischelements 110, welches anschließend wiederum den Abgabeanschluss 113 der Reinigungsvorrichtung 100 beaufschlagt.

In der zweiten bevorzugten Ausführungsform, ist die --wie oben erläutert optionale-- Reguliereinrichtung 220 angeordnet in der Zweig-Mediumszuleitung MZ2 zwischen der zweiten Mediumsquelle MQ2 und dem Venturi-Mischelement 110. Die Reguliereinrichtung 220 weist erkennbar vorliegend in der zweiten Ausführungsform einen offenen Zustand und einen geschlossenen Zustand auf.

Im ersten offenen Zustand sperrt die Reguliereinrichtung 220 dabei die Verbindung zwischen zweiter Mediumsquelle MQ2 und dem zweiten Zuführungsanschluss 112 des Venturi-Mischelements 110. "Sperren" ist in dem Sinne gemeint, dass das Venturi-Mischelement 110 zwar mit dem gasförmigen Medium M1 durchströmbar ist, welches anschließend des Abgabeanschluss 113 beaufschlagt, ein Ansaugen des flüssigen Mediums M2 jedoch unterbunden ist oder nicht erfolgt bzw. nicht mehr erfolgen kann beim "Sperren". Im geschlossenen Zustand öffnet die Reguliereinrichtung 220 die Verbindung zwischen zweiter Mediumsquelle MQ2 und dem zweiten Zuführungsanschluss 112 zum Durchströmen mit dem flüssigen Medium M2. Dies erfolgt bedarfsgerecht, nämlich vorliegend gesteuert selektiv, um somit ein Ansaugen des flüssigen Mediums M2 am zweiten Zuführungsanschluss 112 aufgrund des Venturi-Prinzips zu ermöglichen. Das flüssige Medium M2 wird dabei so lange angesaugt, wie das Venturi-Mischelement 110 mit dem gasförmigen Medium M1 durchströmt wird und das Schaltventil 120 sich im zweiten Schaltzustand S2 befindet. In der Folge wird der Abgabeanschluss 113 der Reinigungsvorrichtung 100 wiederum mit einem Mediumsgemisch MG beaufschlagt.

Allgemein ist die erste und zweite Ausführungsform derart ausgelegt, dass sie in ihrer Funktionsweise für einen ersten Schaltzustand S1 des Schaltventils 120 in der Haupt-Mediumszuleitung MZ1, in dem eine Durchführung des gasförmigen Mediums M1 durch das Mischelement 110 unterbunden ist, bevorzugt auch die Reguliereinrichtung 220 in der Zweig-Mediumszuleitung MZ2 in einem ersten Zustand eine Zuführung des flüssigen Mediums M2 unterbindet oder derart ist, dass die Zuführung des flüssigen Mediums M2 nicht erfolgt.

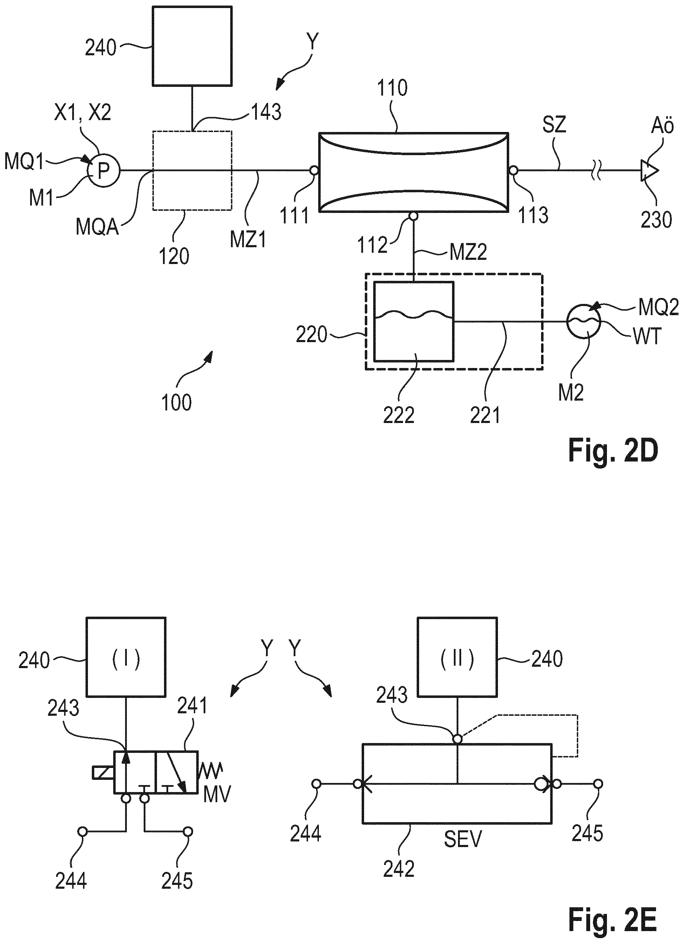

Allgemein ist die Reguliereinrichtung 220 in der Zweig-Mediumszuleitung MZ2 als eine Dosier- und Steuereinrichtung ausgebildet, welche das flüssige Medium M2 reguliert, insbesondere unabhängig vom Schaltventil 120 reguliert, d. h. dosiert und steuert. Die Reguliereinrichtung 220 in der Zweig-Mediumszuleitung MZ2 weist in einer Ausführungsform der Fig. 2D beispielsweise eine Steuereinrichtung 221 auf --insbesondere in Form einer, optional einstellbaren, Drosselund eine Dosiereinrichtung 222 --insbesondere in Form eines Zwischenspeichers--.

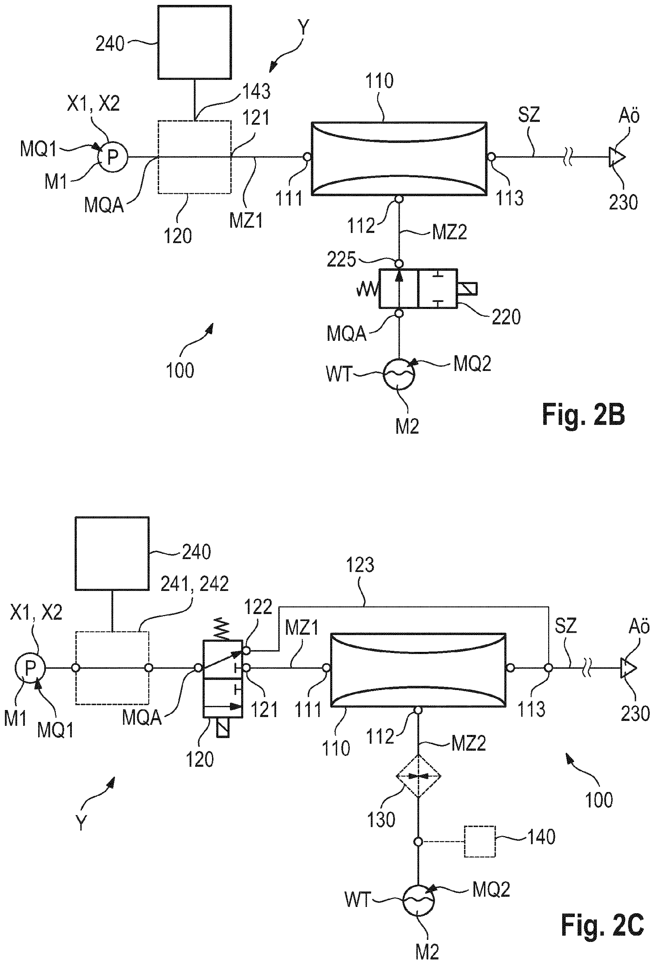

Die Reguliereinrichtung 220 in der Zweig-Mediumszuleitung MZ2 kann zusätzlich oder alternativ, etwa in einer Ausführungsform der Fig. 2B, Fig. 2D, Fig. 3A, Fig. 3C oder Fig. 5 beispielsweise ein 2/2-Wege-Ventil 223 aufweisen.

Die Reguliereinrichtung 220 in der Zweig-Mediumszuleitung MZ2 kann zusätzlich oder alternativ, etwa in einer Ausführungsform der Fig. 2C entfallen aber es kann eine Heiz- und/oder Zusatzeinrichtung 130, 140 vorgesehen sein zum Aufwärmen des flüssigen Mediums M2.

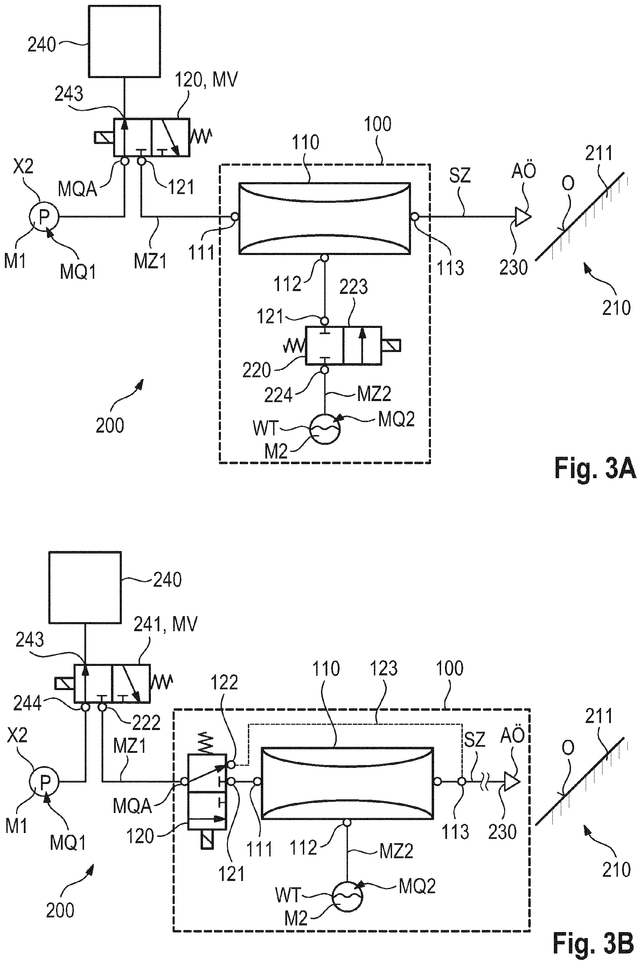

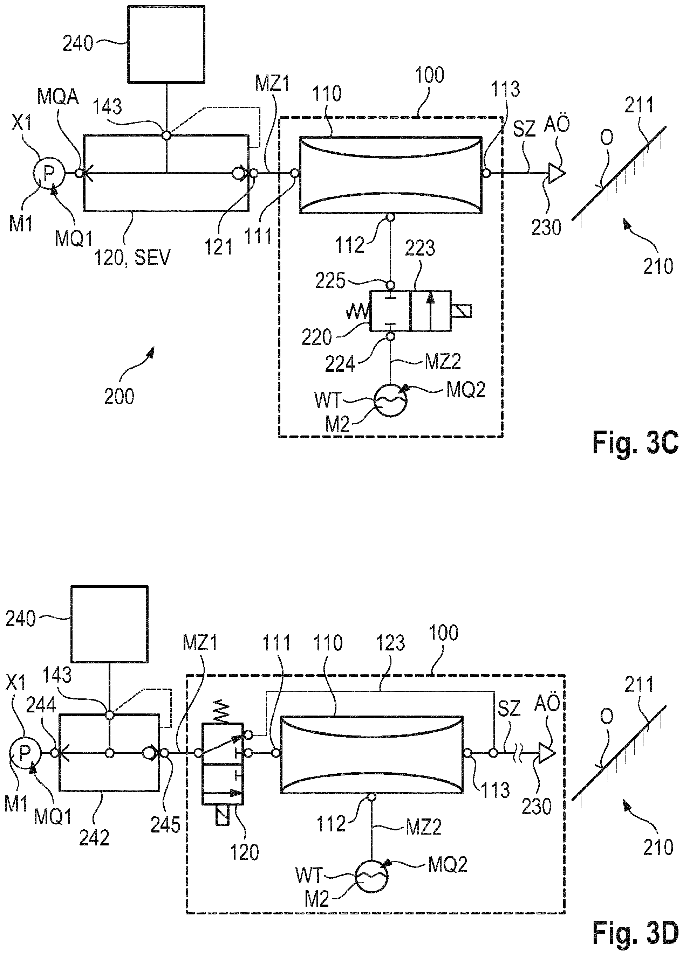

Die Reguliereinrichtung 220 in der Zweig-Mediumszuleitung MZ2 kann zusätzlich oder alternativ auch entfallen und die Zweig-Mediumszuleitung MZ2 kann einbautenfrei sein wie dies etwa in der Ausführungsform der Fig. 3B oder Fig. 3D vorgesehen ist.

Fig. 2B zeigt eine Variante der ersten bevorzugten Ausführungsform der Reinigungsvorrichtung wie in Fig. 1, wobei die Reguliereinrichtung in der Zweig-Mediumszuleitung als 2/2-Wegeventil gebildet ist. Dazu ist in Fig. 2B die bevorzugte Ausführungsform der Reinigungsvorrichtung 100 gezeigt, wobei eine erste Mediumsquelle MQ1 über die Haupt-Mediumszuleitung MZ1 mit dem ersten Zuführungsanschluss 111 des Venturi-Mischelements 110 verbunden ist. Weiter weist das Venturi-Mischelement 110 einen Abgabeanschluss 113 auf. Vorliegend kann auch das Schaltventil 120 als ein 2/2-Wege Magnetventil MV ausgeführt sein.

Das Schaltventil 120 und/oder die Reguliereinrichtung 220 in Form eines Magnetventils MV weist einen Mediumsquellenanschluss (MQA für das Schaltventil 120) auf, zum Verbinden des Magnetventils MV mit der ersten bzw. zweiten Mediumsquelle MQ1, MQ2.

Das Schaltventil 120 weist einen Venturi-Mischelementanschluss 121, zum Verbinden des Magnetventils MV mit dem ersten Zuführungsanschluss 111 des Venturi-Mischelements 110 bzw. die Reguliereinrichtung 220 weist einen Reinigungsvorrichtungsanschluss 225 zum zweiten Zuführungsanschluss 112 des Venturi-Mischelements 110 auf, jeweils über die Hupt- bzw. Zweig-Mediumszuleitung MZ1, MZ2.

Ein Magnetventil MV weist grundsätzlich im Falle des Schaltventils einen ersten Schaltzustand S1 und einen zweiten Schaltzustand S2 auf bzw. im Falle der Reguliereinrichtung 220 einen nicht dargestellten offenen und geschlossenen Zustand auf. Im offenen Zustand der Reguliereinrichtung 220 ist die Verbindung zwischen zweiter Mediumsquelle MQ2 und dem Venturi-Mischelement 110 gesperrt, somit ist der Abgabeanschluss ausschließlich mit dem gasförmigen Medium M1, das heißt, insbesondere mit Druckluft DL, beaufschlagt. Im geschlossenen Zustand der Reguliereinrichtung 220 wird unter der Bedingung, dass gasförmiges Medium M1 von der ersten Mediumsquelle MQ1 weiterhin durch das Venturi-Mischelement 110 strömt und nachfolgend den Abgabeanschluss 113 beaufschlagt, aufgrund des Venturi-Prinzips das flüssige Medium M2, das heißt, insbesondere Wasser, am zweiten Zuführungsanschluss 112 des Venturi-Mischelements 110 angesaugt, und der Abgabeanschluss 113 somit mit einem Mediumsgemisch MG beaufschlagt.

Fig. 2C zeigt eine Variante der erfindungsgemäßen Reinigungsvorrichtung wie in Fig. 2 wobei das Schaltventil in der Haupt-Mediumszuleitung stromabwärts eines Druckraum-Anschlussventils angeordnet ist und wobei eine Heiz- und Zusatzeinrichtung in der Zweig-Mediumszuleitung vorgesehen ist und die Reguliereinrichtung in der Zweig-Mediumszuleitung nicht vorgesehen ist. In Fig. 2C ist weiter die bevorzugte Ausführungsform der Reinigungsvorrichtung 100 gezeigt, wobei eine zweite Mediumsquelle MQ2 über die Zweig-Mediumszuleitung MZ2 mit dem zweiten Zuführungsanschluss 112 des Venturi-Mischelements 110 verbunden ist. Weiter weist das Venturi-Mischelement 110 einen Abgabeanschluss 113 auf.

Vorliegend ist in der Zweig-Mediumszuleitung MZ2 optional zudem eine Heizeinrichtung 130 sowie eine Zusatzeinrichtung 140 angeordnet. Die Heizeinrichtung ist dabei vorgesehen, um bedarfsweise das flüssige Medium M2 vor Beaufschlagung der Oberfläche O mit dem Mediumsgemisch MG vorzuheizen. Hieraus ergibt sich insbesondere während kälterer Jahreszeiten eine effektivere Entfernung von Eis beziehungsweise Schnee von der zu reinigenden Oberfläche O. Die Zusatzeinrichtung 140 ist dabei weiter vorgesehen, um ebenfalls bedarfsweise dem flüssigen Medium M2 vor Beaufschlagung der Oberfläche O mit dem Mediumsgemisch MG, ein Reinigungsmittel zuzusetzen. Hieraus ergibt sich insbesondere eine effektivere Entfernung von beispielsweise ölhaltigen Anhaftungen oder dergleichen von der zu reinigenden Oberfläche O.

Vorliegend ist das Schaltventil 120 als ein 3/2-Wege Magnetventil MV ausgeführt und in der Haupt-Mediumszuleitung MZ1 angeordnet. Das Magnetventil MV des Schaltventils 120 weist einen Mediumsquellenanschluss MQA auf, zum Verbinden des Magnetventils MV mit der ersten Mediumsquelle MQ1, und weiter einen Venturi-Mischelementanschluss 121, zum Verbinden des Magnetventils MV mit dem ersten Zuführungsanschluss 111 des Venturi-Mischelements 110 in einem ersten Schaltzustand S1. Das Magnetventil MV des Schaltventils 120 weist einen Überbrückungsanschluss 122, zum Verbinden des Magnetventils MV mit dem Abgabeanschluss 113 des Venturi-Mischelements 110 in einem zweiten Schaltzustand S2 auf. Somit ermöglicht das Magnetventil MV des Schaltventils 120 im ersten Schaltzustand S1 ein ausschließliches Beaufschlagen des Abgabeanschlusses 113 mit dem gasförmigen Medium M1 über die Bypassleitung 123. Im zweiten Schaltzustand S2 ermöglicht das Magnetventil MV ein Durchströmen des Venturi-Mischelements 110 mit dem gasförmigen Medium M1, und somit aufgrund des Venturi-Prinzips, ein Ansaugen des flüssigen Mediums M2 am zweiten Zuführungsanschluss 112 des Venturi-Mischelements 110, und folglich ein Beaufschlagen des Abgabeanschlusses 113 mit dem Mediumsgemisch MG.

Fig. 2D zeigt eine weitere Variante der ersten Ausführungsform der Reinigungseinrichtung wie in Fig. 1, wobei die Reguliereinrichtung 220 in der Zweig-Mediumszuleitung MZ2 mit einem Zwischenspeicher 222 und einer Drossel 221 in der Zweig-Mediumszuleitung MZ2 gebildet ist. Vorliegend ist die erste Mediumsquelle MQ1 wiederum über die Haupt-Mediumszuleitung MZ1 mit dem ersten Zuführungsanschluss 111 des Venturi-Mischelements 110 verbunden. Weiter weist das Venturi-Mischelement 110 einen Abgabeanschluss 113 auf.

Vorliegend ist die Reguliereinrichtung 220 nunmehr als eine Kombination aus einem Mediumzwischenspeicher 222 und einer Drossel 221 ausgeführt gezeigt. Mediumzwischenspeicher 222 und Drossel 221 befinden sich zudem in der Zweig-Mediumszuleitung MZ2, welche die zweite Mediumsquelle MQ2 mit dem zweiten Zuführungsanschluss 112 des Venturi-Mischelements 110 verbindet. Unter der Bedingung, dass gasförmiges Medium M1 von der ersten Mediumsquelle MQ1 über die Haupt-Mediumszuleitung MZ1 durch das Venturi-Mischelement 110 strömt und nachfolgend den Abgabeanschluss 113 beaufschlagt, wird aufgrund des Venturi-Prinzips das flüssige Medium M2, das heißt, insbesondere Wasser, am zweiten Zuführungsanschluss 112 des Venturi-Mischelements 110 angesaugt aus dem Mediumzwischenspeicher 222, und der Abgabeanschluss 113 in der Folge somit mit einem Mediumsgemisch MG beaufschlagt. Sobald der Vorrat an flüssigem Medium M2 im Mediumzwischenspeicher 222 verbraucht ist, verzögert die Drossel 221 eine erneute Befüllung des Mediumzwischenspeichers 222 mit flüssigem Medium M2, am Abgabeanschluss 113 des Venturi-Mischelements 110 steht wiederum nur das gasförmige Medium M1 an. Eine geeignete Steuerung der Durchströmung des Venturi-Mischelements 110 mit gasförmigen Medium M1 erlaubt somit die Abgabe einer Mediumssequenz aus gasförmigen Medium M1 und Mediumsgemisch MG durch die Reinigungsvorrichtung 100.

Fig. 2E zeigt ein Detail Y der Figuren Fig. 1 Fig. 2B, Fig. 2D in einer ersten Version (I) und in einer zweiten Version (II) für die erste bevorzugte Ausführungsform einer Reinigungsvorrichtung, nämlich insbesondere für Varianten der Fig. 1, Fig. 2B, Fig. 2D gemäß der ersten Ausführungsform sowie m.E. auch für Varianten gemäß der zweiten Ausführungsform einer Reinigungsvorrichtung, nämlich insbesondere für die Ausführungsform der Fig. 2C.

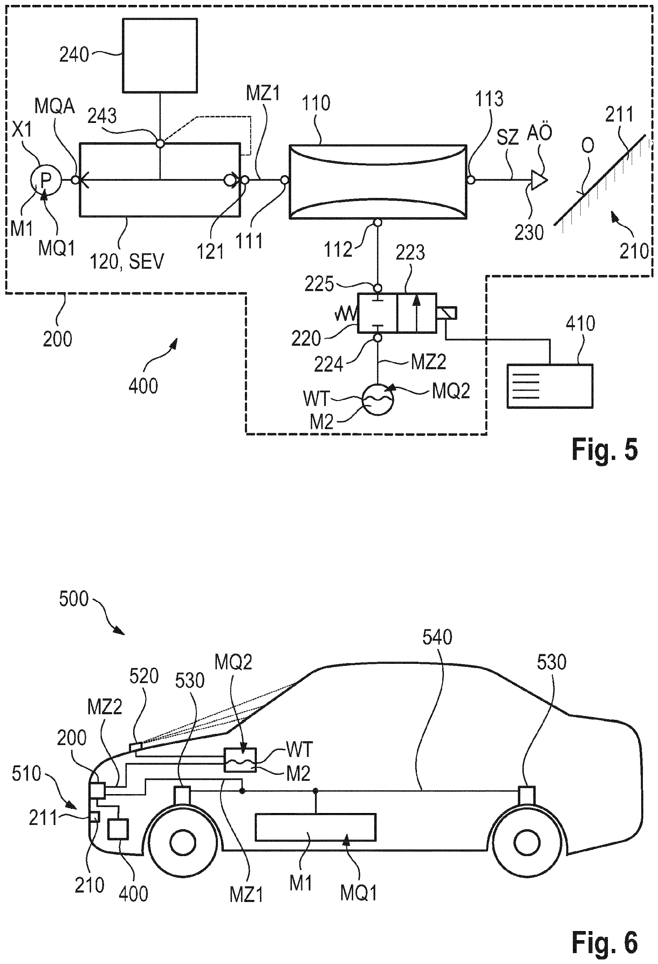

Bei einer bevorzugten Variante von Ausführungsformen einer Reinigungsvorrichtung, nämlich insbesondere für Varianten der Fig. 1, Fig. 2A, Fig. 2B, Fig. 2D, Fig. 3A, Fig. 3C und Fig. 5 ist der Druckraum 240 direkt an einem Druckraumanschluss 143 des Schaltventils 120 angeschlossen. Das Schaltventil 120 kann dazu insbesondere als ein Doppel-Rückschlagventil --wie z. B. in Fig. 3C, Fig. 5-- oder ein 3/2-Wegeventils --wie z. B. in Fig. 3A-- ausgeführt sein. Es kann in diesen Fällen insofern --wie in Fig. 1, Fig. 2B und Fig. 2D angedeutetfür das Schaltventil 120 zwischen Mediumsquellenanschluss MQA und Venturi-Mischelementanschluss 121 das Schaltventil gleichzeitig die Funktion eines Druckraum-Anschlussventils erfüllen.

In einer anderen Variante kann der Druckraum 240 auch über ein zusätzliches Druckraum-Anschlussventil 241, 242 an einem Mediumsquellenanschluss MQA des Schaltventils 120, insbesondere des Schaltventils 120 in Form eines 3/2-Wegeventils, angeschlossen sein. Diese Varianten sind insbesondere in den erfindungsgemäßen

Ausführungsformen der Fig. 2C, Fig. 3B und Fig. 3D erkennbar, bei denen das Schaltventil 120 als ein Überbrückungsventil für ein Mischelement 110 gebildet ist, d. h. mit einem Überbrückungsanschluss 122 zu einer Bypassleitung 123. Ein solches Druckraum-Anschlussventil 241 ist als 3/2-Wegeventil in einer ersten Version (I) des Details Y gezeigt; so auch in Fig. 3B. Ein solches Druckraum-Anschlussventil 242 ist als Doppelrückschlagventil in einer zweiten Version (II) des Details Y gezeigt; so auch in Fig. 3D.

Ein solches Druckraum-Anschlussventil 241, 242 ist insofern bei beiden Versionen I und II mit Mediumsquellenanschluss 244 und Schaltventilanschluss 245 in der Haupt-Mediumszuleitung stromabwärts der ersten Mediumsquelle MQ1 und stromaufwärts vor dem Schaltventil 120 angeordnet und weist einen Druckraumanschluss 243 auf. Insofern ist die erste Mediumsquelle MQ1 in beiden Versionen über die Haupt-Mediumszuleitung MZ1 an dem Mediumsquellenanschluss 244 des Druckraum-Anschlussventils 241, 242 angeschlossen und/oder an einem Mediumsquellenanschluss MQA des Schaltventils 120 angeschlossen.

Fig. 3A zeigt eine konkrete Abwandlung zur ersten bevorzugten Ausführungsform der Reinigungseinrichtung der Fig. 1, wobei das Schaltventil 120 in der Haupt-Mediumszuleitung MZ1 angeordnet ist und die Reguliereinrichtung 220, nämlich eine Dosier- und/oder Steuereinrichtung, in der Zweig-Mediumszuleitung MZ2 angeordnet ist, wobei das Schaltventil 120 als 3/2-Wegeventil und die Reguliereinrichtung 220 als 2/2-Wegeventil gebildet ist. Fig. 3A zeigt dazu die bevorzugte Ausführungsform des Druckluftsystems 200, wobei vorliegend die Reinigungsvorrichtung 100 in der ersten bevorzugten Ausführungsform gemäß der Fig. 1 gezeigt ist. Die Reinigungseinrichtung 100 weist ein Schaltventil 120 in der Haupt-Mediumszuleitung MZ1 und die Reguliereinrichtung 220 in der Zweig-Mediumszuleitung MZ2 auf.

Die Verwendung der ersten, zweiten oder dritten Variante des Konzepts der Erfindung, wie diese im Zusammenhang mit Fig. 1 erläutert wurden, ist bei der Reinigungseinrichtung 100 der Fig. 3A in analoger Weise möglich.

Weiter ist vorliegend der Abgabeanschluss 113 des Venturi-Mischelements 110 über eine Sprühdüsenzuleitung SZ mit einer Sprühdüse 230 verbunden, wobei die Sprühdüse 230 eine Auslassöffnung AÖ aufweist. Über die Sprühdüse 230 wird die zu reinigende Oberfläche O, die beispielsweise eine transparente Abdeckung 211 eines Sensors 210 ist, selektiv mit dem gasförmigen Medium M1 beziehungsweise mit dem Mediumsgemisch MG beaufschlagt.

Das Druckluftsystem 200 weist zudem in der Haupt-Mediumszuleitung MZ1 Das Schaltventil 120 in einer Funktion als Druckraum-Anschlussventil auf, welche vorliegend als 3/2-Wege Magnetventil MV ausgebildet ist. Das Schaltventil 120 verbindet dazu in einem ersten Schaltzustand S1 eine erste Mediumsquelle MQ1, insbesondere eine Druckluftquelle, über einen Mediumsquellenanschluss MQA mit einem Druckraum 240. Dieser Druckraum 240 dient dabei als ein Druckluftspeicher, der im Bedarfsfall - im Gegensatz zu beispielsweise einem Kompressor K - ohne Verzögerung Druckluft DL bereitstellen kann.

Weiterhin verbindet das Schaltventil 120 in einer Funktion als Druckraum-Anschlussventil in einem zweiten Schaltzustand S2 den Druckraum 240 über einen Mischelementanschluss 121 mit dem ersten Zuführungsanschluss 111 des Venturi-Mischelements 110 der Reinigungsvorrichtung 100. Im zweiten Schaltzustand S2 wird somit das Venturi-Mischelement 110 mit dem gasförmigen Medium M1 durchströmt, die Oberfläche O folglich mit diesem über die Sprühdüse 240 beaufschlagt.

Ein bedarfsgerechtes Beaufschlagen der Oberfläche O mit dem Mediumsgemisch MG erfolgt mittels geeigneter Ansteuerung Reguliereinrichtung 220 in der Zweig-Mediumszuleitung MZ2 der Reinigungsvorrichtung 100. Im offenen Zustand dieser Reguliereinrichtung 220 (wie in Fig. 3A gezeigt) ist die zweite Mediumsquelle MQ2 abgesperrt vom Venturi-Mischelement 110, eine Beaufschlagung erfolgt somit ausschließlich mit dem gasförmigen Medium M1, insbesondere mit Druckluft DL.

Im anderen geschlossenen Zustand der Reguliereinrichtung 220 in der Zweig-Mediumszuleitung MZ2 ist die zweite Mediumsquelle MQ2 hingegen mit dem Venturi-Mischelement 110 verbunden. Aufgrund des Venturi-Prinzips kommt es somit zu einem Ansaugen des flüssigen Mediums M2 und zu einem Beaufschlagen der Oberfläche O mit dem Mediumsgemisch MG unter der Voraussetzung, dass sich das zweite Schaltventil 220 im zweiten Schaltzustand S2 befindet und somit gasförmiges Medium M1 vom Druckraum durch das Venturi-Mischelement 110 strömt.

Fig. 3B zeigt eine konkrete Abwandlung zur zweiten Ausführungsform der Fig. 2C mit einem Druckraum-Anschlussventil in der Version (I) des Details Y (in der Fig. 2E) ohne eine Reguliereinrichtung 220 in der Zweig-Mediumszuleitung. Fig. 3B zeigt dazu eine bevorzugte Ausführungsform des Druckluftsystems 200, wobei vorliegend die Reinigungsvorrichtung 100 in der dritten bevorzugten Ausführungsform, das heißt, mit einem optionalen Druckraum-Anschlussventil 241 in der Haupt-Mediumszuleitung MZ1 gezeigt ist. Das Schaltventil 120 ist vorliegend als ein 3/2-Wege Magnetventil MV ausgeführt. Weiter ist vorliegend der Abgabeanschluss 113 des Venturi-Mischelements 110 über eine Sprühdüsenzuleitung SZ mit einer Sprühdüse 230 verbunden, wobei die Sprühdüse 230 weiter eine Auslassöffnung AÖ aufweist. Über die Sprühdüse 230 wird die zu reinigende Oberfläche O, die beispielsweise eine transparente Abdeckung 211 eines Sensors 210 ist, selektiv mit dem gasförmigen Medium M1 beziehungsweise mit dem Mediumsgemisch MG beaufschlagt.

Analog zu der ersten bevorzugten Ausführungsform des Druckluftsystems 200, gezeigt in Fig. 3A, weist die Haupt-Mediumszuleitung MZ1 ein zweites 3/2-Wege Magnetventil MV als Druckraum-Anschlussventil 241 auf. Die Funktion des Druckraum-Anschlussventils 241 und des Schaltventils 120 ist wie zuvor beschrieben in Fig. 2E bzw. den anderen Figuren.

Fig. 3C zeigt eine konkrete Abwandlung zur ersten Ausführungsform der Fig. 2B, wobei gemäß der Version (II) des Details Y (in der Fig. 2E) hier das Schaltventil als Doppelrückschlagventil mit einer gleichzeitigen Funktion als Druckraum-Anschlussventil gebildet ist. Fig. 3C zeigt dazu eine bevorzugte Ausführungsform des Druckluftsystems 200, wobei vorliegend die Reinigungsvorrichtung 100 wiederum in der ersten bevorzugten Ausführungsform, das heißt, mit dem Schaltventil 120 in der Haupt-Mediumszuleitung MZ1 und der Reguliereinrichtung 220 in der Zweig-Mediumszuleitung MZ2gezeigt ist.

Die Verwendung der ersten, zweiten oder dritten Variante des Konzepts der Erfindung, wie diese im Zusammenhang mit Fig. 1 erläutert wurden, ist bei der Reinigungseinrichtung 100 der Fig. 3C in analoger Weise möglich. Vorliegend ist das Schaltventil 120 als Doppelrückschlagventil beziehungsweise als ein Schnellentlüftungsventil SEV ausgeführt gezeigt. Das Doppelrückschlagventil weist einen Mediumsquellenanschluss MQA, zum Anschließen einer ersten Mediumsquelle MQ1, und einen Reinigungsvorrichtungsanschluss 121, zum Verbinden des Schnellentlüftungsventils SEV mit der Reinigungsvorrichtung 100 auf.

Das Schnellentlüftungsventil SEV des Schaltventils 120 übernimmt die Funktion eines zuvor gezeigten 3/2-Wege Magnetventils MV als Druckraum-Anschlussventil und Schaltventil. Das heißt, in einem ersten Schaltzustand S1 des Schaltventils 120 in Form des Schnellentlüftungsventils SEV wird dabei der direkt über einen Druckraumanschluss 143 des Schaltventils 120 mittels einer ersten Mediumsquelle MQ1, insbesondere einer Druckluftquelle, befüllt. Dieser Druckraum 240 dient dabei als ein Druckluftspeicher, der im Bedarfsfall - im Gegensatz zu beispielsweise einem Kompressor K - ohne Verzögerung Druckluft DL bereitstellen kann.

In einem zweiten Schaltzustand S2 des Schaltventils 120 als Schnellentlüftungsventil SEV strömt dann das gasförmige Medium M1, insbesondere Druckluft DL, über den ersten Zuführungsanschluss 111 durch das Venturi-Mischelement 110.

In Abhängigkeit des Zustandes der Reguliereinrichtung 220ist die zweite Mediumsquelle MQ2 entweder abgesperrt vom Venturi-Mischelement 110 und das Schaltventil 120 befindet sich im ersten Schaltzustand S1, eine Beaufschlagung der Oberfläche O erfolgt somit ausschließlich mit dem gasförmigen Medium M1, insbesondere mit Druckluft DL.

Im geschlossenen Zustand der Reguliereinrichtung 220 ist die zweite Mediumsquelle MQ2 hingegen mit dem Venturi-Mischelement 110 verbunden. Aufgrund des Venturi-Prinzips kommt es somit zu einem Ansaugen des flüssigen Mediums M2 und somit zu einem Beaufschlagen der Oberfläche O mit dem Mediumsgemisch MG unter der Voraussetzung, dass sich das Schnellentlüftungsventil SEV im zweiten Schaltzustand S2 befindet und somit gasförmiges Medium M1 vom Druckraum durch das Venturi-Mischelement 110 strömt.

Fig. 3D zeigt eine Abwandlung zur Ausführungsform der Fig. 2C mit einem Druckraum-Anschlussventil 241, 242 in der Version (II) des Details Y (in der Fig. 2E) und ohne eine Reguliereinrichtung 220 in der Zweig-Mediumszuleitung MZ2. Das Druckraum-Anschlussventil 242 ist hier in Form eines Doppelrückschlagventils gebildet.

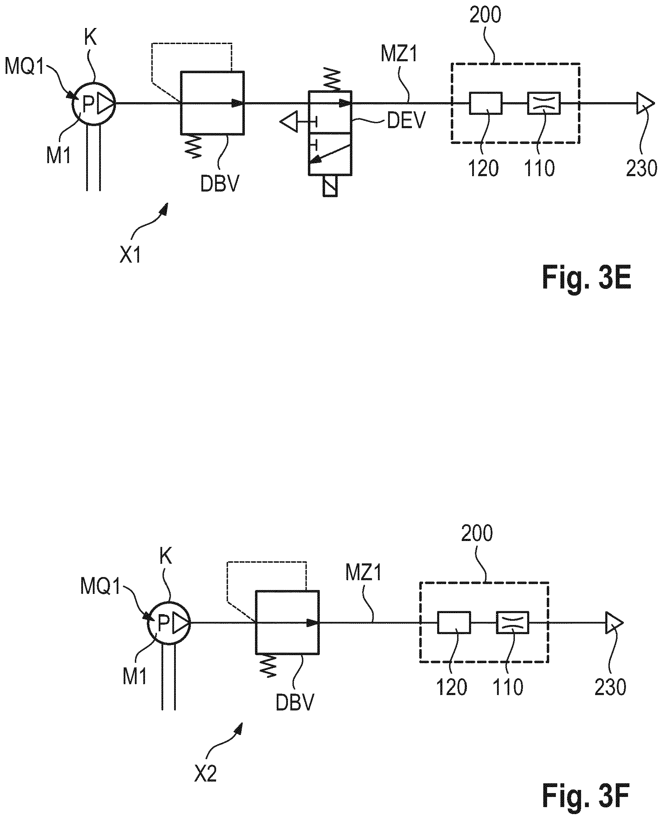

Fig. 3E zeigt eine erste Version einer ersten Mediumsquelle MQ1 gemäß dem Detail X1 in den Figuren mit einem Kompressor K als Druckluftquelle für einen Druck P. In der an die erste Mediumsquelle MQ1 angeschlossenen Haupt-Mediumszuleitung MZ1 folgt für das gasförmige Medium M1 darin stromabwärts ein Druckbegrenzungsventil DBV und ein 3/2-Wege Magnetventil als Druckentlüftungsventil DEV in der Haupt-Mediumszuleitung MZ1. Das Schaltventil 120 in dem Druckluftsystem 200 ist in der Haupt-Mediumszuleitung MZ1 stromabwärts des Druckbegrenzungsventils DBV angeordnet. Das Druckentlüftungsventil DEV, hier insbesondere in Form eines 3/2-Wegeventils, ist zwischen dem Druckbegrenzungsventil DBV und dem Schaltventil 120 angeordnet. Das Schaltventil 120 ist also auch stromabwärts des Druckentlüftungsventils DEV angeordnet.

Fig. 3F zeigt eine zweite Version einer Mediumsquelle MQ1 gemäß dem Detail X2 in den Figuren mit einem Kompressor K als Druckluftquelle für einen Druck P. In der an die erste Mediumsquelle MQ1 angeschlossenen Haupt-Mediumszuleitung MZ1 folgt für das gasförmige Medium M1 darin stromabwärts ein Druckbegrenzungsventil DBV, nämlich in dieser Ausführungsform im Unterschied zu der in Fig. 3E nur ein Druckbegrenzungsventil DBV. Das Schaltventil 120 in dem Druckluftsystem 200 ist in der Haupt-Mediumszuleitung MZ1 stromabwärts des Druckbegrenzungsventils DBV angeordnet. D. h. das Druckbegrenzungsventil DBV ist vorliegend zwischen dem Kompressor K und dem Schaltventil 120 angeordnet.

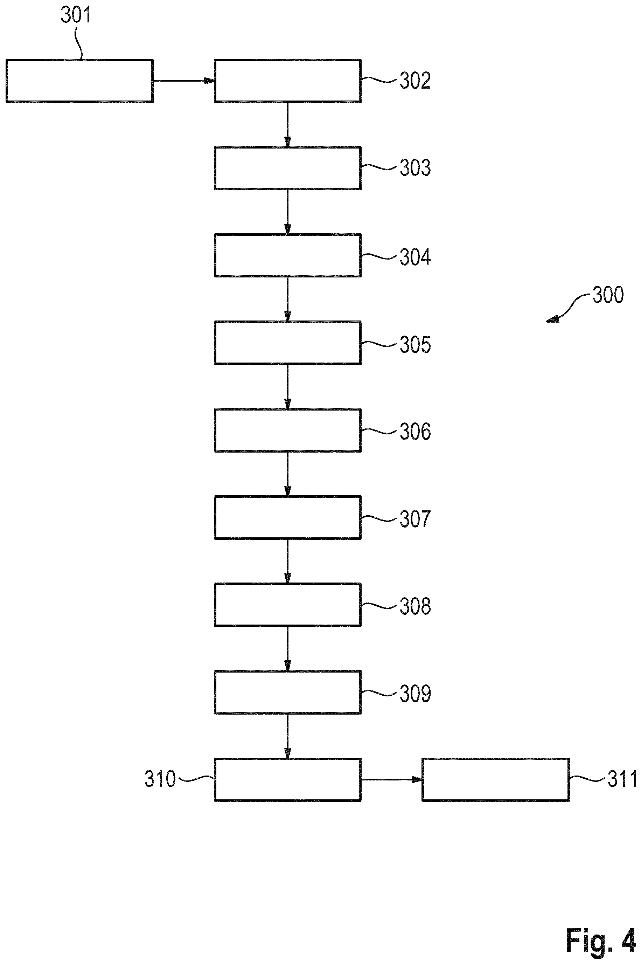

Fig. 4 zeigt ein Ablaufschema für eine bevorzugte Ausführungsform eines Reinigungsverfahren, nämlich eines Ablaufs eines bevorzugten Reinigungsverfahrens 300.

Das Reinigungsverfahren zum Reinigen einer Oberfläche O mit vorzugsweise einer Mediumssequenz MS, durchläuft dabei die nachfolgenden Schritte. In einem ersten Schritt erfolgt das Ansteuern 301 des Schaltventils 120 des Druckluftsystems 200 derart, dass Druckluft DL aus wahlweise der ersten Mediumsquelle MQ1 oder dem Druckraum 240 an die Reinigungsvorrichtung 100 geleitet wird. In einem nächsten Schritt erfolgt das Betreiben 302 des ersten Schaltventils 120 der Reinigungsvorrichtung 100 im ersten Schaltzustand S1. Somit kommt es anschließend zu einem Beaufschlagen 303 des Abgabeanschlusses 113 mit dem gasförmigen Medium M1 und weiter, zum Leiten des gasförmigen Medium M1 vom Abgabeanschlusses 113 an die mindestens eine Sprühdüse 230. In der Folge kommt es zum insbesondere impulsartigen Beaufschlagen 304 der Oberfläche O mit dem gasförmigen Medium M1.

Bedarfsweise erfolgt ein Umschalten 305 des Schaltventils 120 der Reinigungsvorrichtung 100 in den zweiten Schaltzustand S2. Somit kommt es zu einem Ansaugen 306 des flüssigen Medium M2 am zweiten Zuführungsanschluss 112 der Reinigungsvorrichtung 100 durch das Venturi-Prinzip. In der Folge wird ein Vermischen 307 des gasförmigen und des flüssigen Mediums M1/M2 im Venturi-Mischelement 110 zu einem Mediumsgemisch MG bewirkt. Anschließend erfolgt wiederum ein Beaufschlagen 308 des Abgabeanschlusses 113 mit dem Mediumsgemisch MG und somit ein Leiten des Mediumsgemisches MG vom Abgabeanschlusses 113 an die mindestens eine Düse 230. In einem weiteren Schritt kommt es zu einem insbesondere impulsartigen Beaufschlagen 309 der Oberfläche O mit dem Mediumsgemisch MG. Anschließend erfolgt ein selektives Umschalten 310 des Schaltventils 120 der Reinigungsvorrichtung 100 zurück in den ersten Schaltzustand S1. Abschließend kommt es zu einem Ansteuern 311 der Reguliereinrichtung 220 des Druckluftsystems 200 und zum Sperren der Versorgung der Reinigungsvorrichtung 100 mit Druckluft DL.

Fig. 5 zeigt eine Reinigungsvorrichtung in der Ausführungsform der Fig. 3C, mit einer schematischen Darstellung eines Steuerungssystems für ein beispielhaftes Druckluftsystem. Das Steuerungssystems 400 für ein Druckluftsystem 200 ist mittels der Steuer- und/oder Regeleinrichtung 410 ausgebildet, die Schritte des Reinigungsverfahrens 300 gemäß dem Konzept der Erfindung zum Reinigen einer Oberfläche O mit vorzugsweise einer Mediumssequenz MS, aus einem gasförmigen Medium M1 und/oder einem Mediumsgemisch MG durchzuführen.

Fig. 6 zeigt eine schematische Darstellung eines Fahrzeugs mit einem Druckluftsystem und einem Steuerungssystem und einer Reinigungsvorrichtung gemäß dem Konzept der Erfindung. Dazu zeigt Fig. 6 zeigt eine schematische Darstellung eines Fahrzeugs 500 - vorliegend in Form eines PKW - aufweisend ein Druckluftsystem 200 mit einem Sensor 210 eines Sensorsystems 510, wobei der Sensor 210 eine transparente Abdeckung 211 aufweist, und weiter aufweisend ein Steuerungssystem 400.

Vorliegend wird die erste Mediumsquelle MQ1 durch eine Druckluftversorgungsanlage 540 gebildet, welche weiterhin zur Versorgung einer Pneumatikanlage 530 in Form einer Luftfederanlage vorgesehen ist.

Es ist auch möglich, dass die erste Mediumsquelle MQ1 von einem separaten Verdichter oder dergleichen Druckluftquelle gebildet wird. Die erste Mediumsquelle MQ1 ist zwecks Zuführung des gasförmigen Mediums M1 über eine erste Mediumszuleitung MZ1 mit dem Druckluftsystem 200 verbunden.

Die zweite Mediumsquelle MQ2 weist vorliegend einen Wassertank WT auf, welcher ebenfalls zur Versorgung einer Reinigungsanlage in Form einer Scheibenreinigungsanlage 520 mit Reinigungsflüssigkeit, insbesondere Wasser, eingesetzt wird. Dieser Tank ist über eine zweite Mediumszuleitung MZ2 mit dem Druckluftsystem 200 verbunden.

Auf diese Weise kann über eine - hier aus Gründen der Übersichtlichkeit nicht dargestellte - Pumpe das flüssige Medium M2 dem Druckluftsystem 200 bereitgestellt werden. Selbstverständlich ist es bei der zweiten Mediumsquelle MQ2 ebenso möglich, dass diese durch eine eigene separate, insbesondere von anderen Systemen unabhängige, Mediumsquelle gebildet wird.

### Bezugszeichenliste

- 100: Reinigungsvorrichtung
- 110: Mischelement
- 111: erster Zuführungsanschluss
- 112: zweiter Zuführungsanschluss
- 113: Abgabeanschluss
- 120: Schaltventil
- 121: Mischelementanschluss des Schaltventils
- 122: Überbrückungsanschluss des Schaltventils
- 123: Bypassleitung
- 130: Heizeinrichtung
- 140: Zusatzeinrichtung
- 143: Druckraumanschluss des Schaltventils 120
- 200: Druckluftsystem
- 210: Sensor
- 211: transparente Abdeckung
- 220: Reguliereinrichtung
- 221: Steuereinrichtung der Reguliereinrichtung
- 222: Dosiereinrichtung der Reguliereinrichtung
- 223: 2/2-Wegeventil der Reguliereinrichtung
- 224: Mediumsquellenanschluss der Reguliereinrichtung
- 225: Reinigungsvorrichtungsanschluss der Reguliereinrichtung
- 230: Sprühdüse
- 240: Druckraum
- 241: Druckraum-Anschlussventil in Form eines 3/2-Wegeventil
- 242: Druckraum-Anschlussventil in Form eines Doppelrückschlagventils
- 243: Druckraumanschluss des Druckraum-Anschlussventils 241, 242
- 244: Mediumsquellenanschluss des Druckraum-Anschlussventils 241, 242
- 245: Schaltventilanschluss des Druckraum-Anschlussventils 241, 242
- 300: Verfahren
- 301,302,303, 304,305,306, 307,308,309, 310,311: Verfahrensschritte
- 400: Steuerungssystem
- 410: Steuer- und/oder Regeleinrichtung
- 500: Fahrzeug
- 510: Sensorsystem
- 520: Scheibenreinigungsanlage
- 530: Pneumatikanlage
- 540: Druckluftversorgungsanlage
- AÖ: Auslassöffnung
- D_{α}: Winkel
- DL: Druckluft
- DRV: Doppelrückschlagventil
- DBV: Druckbegrenzungsventil
- DEV: Druckentlüftungsventil
- K: Kompressor
- LFA: Luftfederanlage
- M1: gasförmiges Medium
- M2: flüssiges Medium
- MG: Mediumsgemisch
- MS: Mediumssequenz
- MQ1: erste Mediumsquelle
- MQ2: zweite Mediumsquelle
- MQA: Mediumsquellenanschluss des Schaltventils 120
- MV: Magnetventil
- MZ1: Haupt-Mediumszuleitung
- MZ2: Zweig-Mediumszuleitung
- O: Oberfläche
- OS: optischer Sensor
- P: Druck der Druckluft DL in der Druckluftquelle der ersten Mediumsquelle MQ1
- RA: Reinigungsanlage
- RF: Reinigungsflüssigkeit
- RM: Reinigungsmittel
- S1: erster Schaltzustand
- S2: zweiter Schaltzustand
- SEV: Schnellentlüftungsventil
- SZ: Sprühdüsenzuleitung
- T_{UG}: Umgebungstemperatur
- UES: Umgebungserfassungssensor
- VQ: Ventilquerschnitt
- WT: Wassertank
- X1, X2, Y: Detail

## Patentansprüche

1. Reinigungsvorrichtung (100) zum Abgeben eines gasförmigen Mediums (M1), insbesondere Druckluft (DL), und/oder eines Mediumsgemisches (MG) aus dem gasförmigen Medium (M1) und einem flüssigen Medium (M2), insbesondere Wasser, vorzugsweise als eine Mediumssequenz (MS), aufweisend:
- ein Mischelement (110)
- mit einem ersten Zuführungsanschluss (111) in einer Haupt-Mediumszuleitung (MZ1) zum Zuführen des gasförmigen Mediums (M1) zur Durchführung durch das Mischelement (110), und
- einem zweiten Zuführungsanschluss (112) in einer Zweig-Mediumszuleitung (MZ2) zum Zuführen des flüssigen Mediums (M2) quer zur Durchführung in das Mischelement (110), und
- einen Abgabeanschluss (113) zum Abgeben des gasförmigen Mediums (M1) und/oder des Mediumsgemisches (MG),
- einen Druckraum (240) an der Haupt-Mediumszuleitung (MZ1),
- ein Schaltventil (120) in der Haupt-Mediumszuleitung (MZ1) angeordnet ist, das ausgebildet ist, eine Durchführung des gasförmigen Mediums (M1) durch das Mischelement (110) in einem ersten Schaltzustand (S1) zu unterbinden und in einem zweiten Schaltzustand (S2) zuzulassen, wobei
- das Schaltventil (120) in der Haupt-Mediumszuleitung (MZ1) stromabwärts des und/oder an dem Druckraum (240) angeordnet ist, und das Schaltventil (120) als ein 3/2-Wegeventil oder als ein Doppel-Rückschlagventil gebildet ist,
**dadurch gekennzeichnet, dass**
das Schaltventil (120) als ein Überbrückungs-Ventil ausgebildet ist, mit einem Überbrückungsanschluss (122), zum Überbrücken des Mischelements (110), wobei der Überbrückungsanschluss (122) direkt an dem Abgabeanschluss (113) angeschlossen ist.

2. Reinigungsvorrichtung (100) nach Anspruch 1, **dadurch gekennzeichnet, dass**
- eine Reguliereinrichtung (220), nämlich eine Dosier- und/oder Steuereinrichtung (220), in der Zweig-Mediumszuleitung (MZ2) angeordnet ist, die ausgebildet ist, eine Zuführung des flüssigen Mediums (M2), insbesondere unabhängig vom Schaltventil (120), zu regulieren, wobei
- für einen zweiten Schaltzustand (S2) des Schaltventils (120) in der Haupt-Mediumszuleitung (MZ1), in dem eine Durchführung des gasförmigen Mediums (M1) durch das Mischelement (110) zugelassen ist:
- die Reguliereinrichtung (220) in der Zweig-Mediumszuleitung (MZ2) in einem ersten Zustand eine Zuführung des flüssigen Mediums (M2) unterbindet, wobei
- das gasförmige Medium (M1) am Abgabeanschluss (113) ansteht derart, dass dieser ausschließlich mit dem gasförmigen Medium (M1) beaufschlagbar ist, und
- die Reguliereinrichtung (220) in der Zweig-Mediumszuleitung (MZ2) in einem zweiten Zustand eine Zuführung des flüssigen Mediums (M2) zulässt, wobei
- das gasförmige Medium (M1) am Abgabeanschluss (113) ansteht und das flüssige Medium (M2) am zweiten Zuführungsanschluss (112) ansaugbar ist, um den Abgabeanschluss (113) mit dem Mediumsgemisch (MG) zu beaufschlagen.

3. Reinigungsvorrichtung (100) nach Anspruch 1 oder 2, **dadurch gekennzeichnet, dass** das Mischelement (110) ein Venturi-Mischelement ist.

4. Reinigungsvorrichtung (100) nach Anspruch 1 bis 3, **dadurch gekennzeichnet, dass** der Abgabeanschluss (113) zum Abgeben des gasförmigen Mediums (M1) und/oder des Mediumsgemisches (MG) der einzige Abgabeanschluss (113) ist.

5. Reinigungsvorrichtung (100) nach einem der Ansprüche 1 bis 4, **dadurch gekennzeichnet, dass** das Schaltventil (120) in der Haupt-Mediumszuleitung (MZ1), zwischen einer ersten Mediumsquelle (MQ1) und dem ersten Zuführungsanschluss (111) des Mischelements (110) angeordnet ist.

6. Reinigungsvorrichtung (100) nach einem der Ansprüche 1 bis 5, **dadurch gekennzeichnet, dass** das Schaltventil (120) in der Haupt-Mediumszuleitung (MZ1), stromabwärts eines Druckbegrenzungsventils (DBV) angeordnet ist.

7. Reinigungsvorrichtung (100) nach Anspruch 6, **dadurch gekennzeichnet, dass** zwischen dem Druckbegrenzungsventil (DBV) und dem Schaltventil (120) ein Druckentlüftungsventil (DEV), insbesondere in Form eines 3/2-Wegeventils, angeordnet ist.

8. Reinigungsvorrichtung (100) nach einem der Ansprüche 1 bis 7, **dadurch gekennzeichnet, dass** die Reguliereinrichtung (220) in der Zweig-Mediumszuleitung (MZ2) als eine Dosier- und Steuereinrichtung ausgebildet ist, welche das flüssige Medium (M2) dosiert und steuert
- mit einer Steuereinrichtung (221), insbesondere in Form einer, optional einstellbaren, Drossel, und einer Dosiereinrichtung (222), insbesondere in Form eines Zwischenspeichers, und/oder
- mit einem 2/2-Wege-Ventil.

9. Reinigungsvorrichtung (100) nach einem der Ansprüche 1 bis 8, **dadurch gekennzeichnet, dass** der Druckraum (240) direkt an einem Druckraumanschluss (243) des Schaltventils (120), insbesondere eines Doppel-Rückschlagventils (242) oder 3/2-Wegeventils (241), angeschlossen ist.

10. Reinigungsvorrichtung (100) nach einem der Ansprüche 1 bis 8, **dadurch gekennzeichnet, dass** der Druckraum (240) über ein Druckraum-Anschlussventil (241, 242) an einem Mediumsquellenanschluss (MQA) des Schaltventils (120), insbesondere des Schaltventils (120) in Form eines 3/2-Wegeventils, angeschlossen ist.

11. Reinigungsvorrichtung (100) nach einem der Ansprüche 1 bis 10, **dadurch gekennzeichnet, dass** die erste Mediumsquelle (MQ1) über die Haupt-Mediumszuleitung (MZ1) an einem Mediumsquellenanschluss (244) des Druck-raum-Anschlussventils (241, 242) angeschlossen ist und/oder an einem Mediumsquellenanschluss (MQA) des Schaltventils (120) angeschlossen ist.

12. Reinigungsvorrichtung (100) nach einem der Ansprüche 1 bis 10, **dadurch gekennzeichnet, dass** das Schaltventil (120) als ein Magnetventil (MV) in der Haupt-Mediumszuleitung (MZ1) ausgebildet ist, nämlich als das 3/2-Wegeventil oder das Doppel-Rückschlagventil, wobei das 3/2-Wegeventil oder das Doppel-Rückschlagventil jeweils einen Mediumsquellenanschluss (MQA) und einen Mischelementanschluss (121) in der Haupt-Mediumszuleitung (MZ1) aufweisen.

13. Reinigungsvorrichtung (100) nach einem der Ansprüche 1 bis 12, **dadurch gekennzeichnet, dass** die Zusammensetzung und Abfolge der Mediumssequenz (MS) zeitlich, insbesondere selektiv und/oder intermittierend, steuerbar ist.

14. Reinigungsvorrichtung (100) nach einem der der Ansprüche 1 bis 13, **dadurch gekennzeichnet, dass** das gasförmige Medium (M1), insbesondere Druckluft (DL), und/oder das Mediumsgemisch (MG) aus dem gasförmigen Medium (M1) und dem flüssigen Medium (M2), insbesondere Wasser, impulsartig abgebbar ist.

15. Reinigungsvorrichtung (100) nach einem der der Ansprüche 1 bis 14, **dadurch gekennzeichnet, dass** eine Heizeinrichtung (130) in der Zweig-Mediumszuleitung (MZ2) ausgebildet ist, das das flüssige Medium (M2) relativ zu einer Umgebungstemperatur (T_{UG}) zu erwärmen.

16. Reinigungsvorrichtung (100) nach einem der Ansprüche 1 bis 15, **gekennzeichnet durch** eine Zusatzeinrichtung (140), mittels der wenigstens das flüssige Medium (M2) mit einem Reinigungsmittel (RM), insbesondere einer Reinigungsflüssigkeit (RF), versetzbar ist.

17. Reinigungsvorrichtung (100) nach einem der Ansprüche 1 bis 16, **dadurch gekennzeichnet, dass**
- für einen ersten Schaltzustand (S1) des Schaltventils (120) in der Haupt-Mediumszuleitung (MZ1), in dem eine Durchführung des gasförmigen Mediums (M1) durch das Mischelement (110) unterbunden ist, die Reguliereinrichtung (220) in der Zweig-Mediumszuleitung (MZ2) in einem ersten Zustand eine Zuführung des flüssigen Mediums (M2) unterbindet.

18. Druckluftsystem (200) zum Reinigen einer Oberfläche (O), aufweisend:
- mindestens einen Sensor (210) eines Sensorsystems (510), wobei der Sensor (210), insbesondere eine transparente Abdeckung (211) des Sensors (210), eine Oberfläche (O) aufweist, und
- mindestens eine Reinigungsvorrichtung (100) nach einem der Ansprüche 1 bis 17, wobei
- eine erste Mediumsquelle (MQ1) des Druckluftsystems (200) über die Haupt-Mediumszuleitung (MZ1) mit dem Mediumsquellenanschluss (MQA) des Schaltventils (120) verbindbar ist, und
- eine zweite Mediumsquelle (MQ2) des Druckluftsystems (200) über die Zweig-Mediumszuleitung (MZ2) mit dem Mediumsquellenanschluss (224) der Reguliereinrichtung (220) und/oder mit dem zweiten Zuführungsanschuss (112) des Mischelements (110) verbindbar ist, und
- mindestens eine Sprühdüse (230) über eine Sprühdüsenzuleitung (SZ) mit dem Abgabeanschluss (113) verbindbar ist.

19. Druckluftsystem (200) nach Anspruch 18, **dadurch gekennzeichnet, dass** die mindestens eine Sprühdüse (230) mit einer gemeinsamen Auslassöffnung (AÖ) für das gasförmige Medium (M1) und das Mediumsgemisch (MG) ausgebildet ist.

20. Druckluftsystem (200) nach Anspruch 18 oder 19, **dadurch gekennzeichnet, dass**
- die erste Mediumsquelle (MQ1) als eine Druckluftquelle, insbesondere als ein Kompressor (K), und die zweite Mediumsquelle (MQ2) als ein Fluidtank (FT), insbesondere als ein Wassertank (WT), ausgebildet ist, und/oder
- die zweite Mediumsquelle (MQ2), insbesondere der Wassertank (WT), unterhalb des Mischelementes (110) angeordnet ist.

21. Druckluftsystem (200) nach einem der Ansprüche 18 bis 20, **dadurch gekennzeichnet, dass**
- die erste Mediumsquelle (MQ1) einem anderen Primärzweck dient, insbesondere der Versorgung einer Luftfederanlage (LFA) oder dergleichen Pneumatikanlage (530), und/oder
- die zweite Mediumsquelle (MQ2) einem anderen Primärzweck dient, insbesondere der Versorgung einer Scheibenreinigungsanlage (520) oder dergleichen Reinigungsanlage (RA).

22. Druckluftsystem (200) nach einem der Ansprüche 18 bis 21, **dadurch gekennzeichnet, dass** der Sensor (210) ein optischer Sensor (OS), insbesondere ein Umgebungserfassungssensor (UES) ist.

23. Reinigungsverfahren (300) zum Reinigen einer Oberfläche (O), mit einer Reinigungsvorrichtung (100) nach einem der Ansprüche 1 bis 17, insbesondere einem Druckluftsystem (200) nach einem der Ansprüche 18 bis 21.

24. Reinigungsverfahren (300) nach Anspruch 23 aufweisend einen oder mehrere der Schritte:
- Ansteuern (301) des Schaltventils (120) des Druckluftsystems (200) und Leiten von Druckluft (DL) aus wahlweise der ersten Mediumsquelle (MQ1) oder dem Druckraum (240),
- Betreiben (302) des Schaltventils (120) der Reinigungsvorrichtung (100) im ersten Schaltzustand (S1), in dem eine Durchführung des gasförmigen Mediums (M1) durch das Mischelement (110) unterbunden ist, und wobei die Reguliereinrichtung (220) in der Zweig-Mediumszuleitung (MZ2) in einem ersten Zustand eine Zuführung des flüssigen Mediums (M2) unterbindet,
- Beaufschlagen (303) des Abgabeanschlusses (113) mit dem gasförmigen Medium (M1) und Leiten des gasförmigen Medium (M1) vom Abgabeanschlusses (113) an die mindestens eine Sprühdüse (230),
- Beaufschlagen (304) der Oberfläche (O), insbesondere impulsartig, mit nur dem gasförmigen Medium (M1).

25. Reinigungsverfahren (300) nach Anspruch 23 oder 24, aufweisend einen oder mehrere der Schritte:
- selektives Umschalten (305) des Schaltventils (120) der Reinigungsvorrichtung (100) in den zweiten Schaltzustand (S2), in dem eine Durchführung des gasförmigen Mediums (M1) durch das Mischelement (110) zugelassen ist, wobei die Reguliereinrichtung (220) in der Zweig-Mediumszuleitung (MZ2) in einem zweiten Zustand eine Zuführung des flüssigen Mediums (M2) zulässt,
- Ansaugen (306) des flüssigen Medium (M2) am zweiten Zuführungsanschluss (112) der Reinigungsvorrichtung (100) durch das Venturi-Prinzip,
- Vermischen (307) des gasförmigen und des flüssigen Mediums (M1/M2) in Venturi-Mischelement (110) zu einem Mediumsgemisch (MG),
- Beaufschlagen (308) des Abgabeanschlusses (113) mit dem Mediumsgemisch (MG) und Leiten des Mediumsgemisches (MG) vom Abgabeanschlusses (113) an die mindestens eine Sprühdüse (230),
- Beaufschlagen (309) der Oberfläche (O), insbesondere impulsartig, mit dem Mediumsgemisch (MG).

26. Reinigungsverfahren (300) nach einem der Ansprüche 23 bis 25, aufweisend einen oder mehrere der Schritte:
- selektives Umschalten (310) des Schaltventils (120) der Reinigungsvorrichtung (100) in den ersten Schaltzustand (S1),
- Ansteuern (311) der Reguliereinrichtung (220), wobei die Reguliereinrichtung (220) in der Zweig-Mediumszuleitung (MZ2) in einem ersten Zustand eine Zuführung des flüssigen Mediums (M2) unterbindet und/oder in einem zweiten Zustand eine Zuführung des flüssigen Mediums (M2) zulässt,

27. Reinigungsverfahren (300) nach einem der Ansprüche 23 bis 26, **dadurch gekennzeichnet, dass** das Reinigen einer Oberfläche (O) zeitlich gesteuert, insbesondere abwechselnd und/oder intermittierend, erfolgt.

28. Steuerungssystem (400) mit einer Steuer- und/oder Regeleinrichtung (410), ausgebildet, die Schritte des Reinigungsverfahrens (300) nach einem der Ansprüche 23 bis 27 zu steuern.

29. Fahrzeug (500) mit einem Druckluftsystem (200) nach einem der Ansprüche 18 bis 22 und einem Steuerungssystem (400) nach Anspruch 28, wobei eine Pneumatikanlage (530) zur Versorgung der ersten Mediumsquelle (MQ1) mit dem gasförmigen Medium (M1) an das Druckluftsystem (200) angeschlossen ist und eine Scheibenreinigungsanlage (520) zur Versorgung der zweiten Mediumsquelle (MQ2) mit dem flüssigen Medium (M2) an das Druckluftsystem (200) angeschlossen ist.

## Claims

1. Cleaning apparatus (100) for dispensing a gaseous medium (M1), in particular compressed air (DL), and/or a media mixture (MG) consisting of the gaseous medium (M1) and a liquid medium (M2), in particular water, preferably as a media sequence (MS), comprising:
- a mixing element (110) having
- a first feed connection (111) in a main medium supply line (MZ1) for supplying the gaseous medium (M1) for passage through the mixing element (110), and
- second feed connection (112) in a branching medium supply line (MZ2) for supplying the liquid medium (M2) transversely for passage into the mixing element (110), and
- a dispensing connection (113) for dispensing the gaseous medium (M1) and/or the media mixture (MG),
- a pressure chamber (240) on the main medium supply line (MZ1),
- a switching valve (120) is arranged in the main medium supply line (MZ1), which is designed to prevent a passage of the gaseous medium (M1) through the mixing element (110) in a first switching state (S1) and to allow said passage in a second switching state (S2), wherein
- the switching valve (120) is arranged in the main medium supply line (MZ1) downstream of and/or on the pressure chamber (240), and the switching valve (120) is formed as a 3/2-way valve or as a double check valve,
**characterized in that**
the switching valve (120) is formed as a bypass valve having a bypass connection (122) for bypassing the mixing element (110), wherein the bypass connection (122) is directly connected to the dispensing connection (113).

2. Cleaning apparatus (100) according to claim 1, **characterized in that**
- a regulating device (220), specifically a metering and/or control device (220), is arranged in the branching medium supply line (MZ2), which device is designed to regulate a supply of the liquid medium (M2), in particular independently of the switching valve (120), wherein
- for a second switching state (S2) of the switching valve (120) in the main medium supply line (MZ1), in which passage of the gaseous medium (M1) through the mixing element (110) is permitted:
- the regulating device (220) in the branching medium supply line (MZ2) prevents supply of the liquid medium (M2) in a first state, wherein
- the gaseous medium (M1) is present at the dispensing connection (113) in such a way that said connection can be supplied exclusively with the gaseous medium (M1), and
- the regulating device (220) in the branching medium supply line (MZ2) permits supply of the liquid medium (M2) in a second state, wherein
- the gaseous medium (M1) is present at the dispensing connection (113) and the liquid medium (M2) can be drawn in at the second feed connection (112) in order to supply the dispensing connection (113) with the media mixture (MG).

3. Cleaning apparatus (100) according to either claim 1 or claim 2,
**characterized in that** the mixing element (110) is a Venturi mixing element.

4. Cleaning apparatus (100) according to claim 1 to claim 3,
**characterized in that** the dispensing connection (113) for dispensing the gaseous medium (M1) and/or the media mixture (MG) is the only dispensing connection (113).

5. Cleaning apparatus (100) according to any of claims 1 to 4,
**characterized in that** the switching valve (120) is arranged in the main medium supply line (MZ1), between a first medium source (MQ1) and the first feed connection (111) of the mixing element (110).

6. Cleaning apparatus (100) according to any of claims 1 to 5,
**characterized in that** the switching valve (120) is arranged in the main medium supply line (MZ1), downstream of a pressure limiting valve (DBV).

7. Cleaning apparatus (100) according to claim 6, **characterized in that** a pressure venting valve (DEV), in particular in the form of a 3/2-way valve, is arranged between the pressure limiting valve (DBV) and the switching valve (120).

8. Cleaning apparatus (100) according to any of claims 1 to 7,
**characterized in that** the regulating device (220) in the branching medium supply line (MZ2) is designed as a metering and control device which meters and controls the liquid medium (M2),
- having a control device (221), in particular in the form of an optionally adjustable throttle, and a metering device (222), in particular in the form of an intermediate store, and/or
- having a 2/2-way valve.

9. Cleaning apparatus (100) according to any of claims 1 to 8,
**characterized in that** the pressure chamber (240) is directly connected to a pressure chamber connection (243) of the switching valve (120), in particular of a double check valve (242) or a 3/2-way valve (241).

10. Cleaning apparatus (100) according to any of claims 1 to 8,
**characterized in that** the pressure chamber (240) is connected via a pressure chamber connection valve (241, 242) to a medium source connection (MQA) of the switching valve (120), in particular of the switching valve (120) in the form of a 3/2-way valve.

11. Cleaning apparatus (100) according to any of claims 1 to 10,
**characterized in that** the first medium source (MQ1), is connected via the main medium supply line (MZ1) to a medium source connection (244) of the pressure chamber connection valve (241, 242) and/or to a medium source connection (MQA) of the switching valve (120).

12. Cleaning apparatus (100) according to any of claims 1 to 10,
**characterized in that** the switching valve (120) is designed as a solenoid valve (MV) in the main medium supply line (MZ1), specifically as the 3/2-way valve or the double check valve, wherein the 3/2-way valve or the double check valve each comprise a medium source connection (MQA) and a mixing element connection (121) in the main medium supply line (MZ1).

13. Cleaning apparatus (100) according to any of claims 1 to 12,
**characterized in that** the composition and order of the media sequence (MS) can be controlled over time, in particular selectively and/or intermittently.

14. Cleaning apparatus (100) according to any of claims 1 to 13,
**characterized in that** the gaseous medium (M1), in particular compressed air (DL), and/or the media mixture (MG) consisting of the gaseous medium (M1) and the liquid medium (M2), in particular water, can be dispensed in a pulsed manner.

15. Cleaning apparatus (100) according to any of claims 1 to 14,
**characterized in that** a heating device (130) in the branching medium supply line (MZ2) is designed to heat the the liquid medium (M2) relative to an ambient temperature (T_{UG}).

16. Cleaning apparatus (100) according to any of claims 1 to 15,
**characterized by** an auxiliary device (140), by means of which at least the liquid medium (M2) can be mixed with a cleaning agent (RM), in particular a cleaning liquid (RF).

17. Cleaning apparatus (100) according to any of claims 1 to 16,
**characterized in that**
- for a first switching state (S1) of the switching valve (120) in the main medium supply line (MZ1), in which passage of the gaseous medium (M1) through the mixing element (110) is prevented, the regulating device (220) in the branching medium supply line (MZ2) prevents supply of the liquid medium (M2) in a first state.

18. Compressed air system (200) for cleaning a surface (O), comprising:
- at least one sensor (210) of a sensor system (510), wherein the sensor (210), in particular a transparent cover (211) of the sensor (210), comprises a surface (O), and
- at least one cleaning apparatus (100) according to any of claims 1 to 17, wherein
- a first medium source (MQ1) of the compressed air system (200) can be connected via the main medium supply line (MZ1) to the medium source connection (MQA) of the switching valve (120), and
- a second medium source (MQ2) of the compressed air system (200) can be connected via the branching medium supply line (MZ2) to the medium source connection (224) of the regulating device (220) and/or to the second feed connection (112) of the mixing element (110), and
- at least one spray nozzle (230) can be connected to the dispensing connection (113) via a spray nozzle supply line (SZ).

19. Compressed air system (200) according to claim 18, **characterized in that** the at least one spray nozzle (230) is formed with a common outlet opening (AO) for the gaseous medium (M1) and the media mixture (MG).

20. Compressed air system (200) according to either claim 18 or claim 19,
**characterized in that**
- the first medium source (MQ1) is designed as a compressed air source, in particular as a compressor (K), and the second medium source (MQ2) is designed as a fluid tank (FT), in particular as a water tank (WT), and/or
- the second medium source (MQ2), in particular the water tank (WT), is arranged below the mixing element (110).

21. Compressed air system (200) according to any of claims 18 to 20,
**characterized in that**
- the first medium source (MQ1) is used for another primary purpose, in particular for supplying an air suspension system (LFA) or a similar pneumatic system (530), and/or
- the second medium source (MQ2) is used for another primary purpose, in particular for supplying a windscreen cleaning system (520) or a similar cleaning system (RA).

22. Compressed air system (200) according to any of claims 18 to 21,
**characterized in that** the sensor (210) is an optical sensor (OS), in particular an environment detection sensor (UES).

23. Cleaning method (300) for cleaning a surface (O) using a cleaning apparatus (100) according to any of claims 1 to 17, in particular a compressed air system (200) according to any of claims 18 to 21.

24. Cleaning method (300) according to claim 23, comprising one or more of the steps of:
- controlling (301) the switching valve (120) of the compressed air system (200) and conducting compressed air (DL) from optionally the first medium source (MQ1) or the pressure chamber (240),
- operating (302) the switching valve (120) of the cleaning apparatus (100) in the first switching state (S1), in which passage of the gaseous medium (M1) through the mixing element (110) is prevented, and wherein the regulating device (220) in the branching medium supply line (MZ2) prevents supply of the liquid medium (M2) in a first state,
- supplying (303) the dispensing connection (113) with the gaseous medium (M1) and conducting the gaseous medium (M1) from the dispensing connection (113) to the at least one spray nozzle (230),
- applying (304) only the gaseous medium (M1) to the surface (O), in particular in a pulsed manner.

25. Cleaning method (300) according to either claim 23 or claim 24, comprising one or more of the steps of:
- selectively switching (305) the switching valve (120) of the cleaning apparatus (100) into the second switching state (S2), in which passage of the gaseous medium (M1) through the mixing element (110) is permitted, wherein the regulating device (220) in the branching medium supply line (MZ2) permits supply of the liquid medium (M2) in a second state,
- drawing in (306) the liquid medium (M2) at the second feed connection (112) of the cleaning apparatus (100) by means of the Venturi principle,
- mixing (307) the gaseous and the liquid medium (M1/M2) in the Venturi mixing element (110) to form a media mixture (MG),
- supplying (308) the dispensing connection (113) with the media mixture (MG) and conducting the media mixture (MG) from the dispensing connection (113) to the at least one spray nozzle (230),
- applying (309) the media mixture (MG) to the surface (O), in particular in a pulsed manner.

26. Cleaning method (300) according to any of claims 23 to 25, comprising one or more of the steps of:
- selectively switching (310) the switching valve (120) of the cleaning apparatus (100) into the first switching state (S1),
- controlling (311) the regulating device (220), wherein the regulating device (220) in the branching medium supply line (MZ2) prevents supply of the liquid medium (M2) in a first state and/or permits supply of the liquid medium (M2) in a second state,

27. Cleaning method (300) according to any of claims 23 to 26,
**characterized in that** the cleaning of a surface (O) takes place in a time-controlled manner, in particular alternately and/or intermittently.

28. Control system (400) comprising a control and/or regulating device (410) configured to control the steps of the cleaning method (300) according to any of claims 23 to 27.

29. Vehicle (500) comprising a compressed air system (200) according to any of claims 18 to 22 and a control system (400) according to claim 28, wherein a pneumatic system (530) for supplying the first medium source (MQ1) with the gaseous medium (M1) is connected to the compressed air system (200), and a windscreen cleaning system (520) for supplying the second medium source (MQ2) with the liquid medium (M2) is connected to the compressed air system (200).

## Revendications

1. Dispositif de nettoyage (100) permettant de distribuer un milieu gazeux (M1), en particulier de l'air comprimé (DL), et/ou un mélange de milieux (MG) constitué du milieu gazeux (M1) et d'un milieu liquide (M2), en particulier de l'eau, de préférence en tant que séquence de milieux (MS), présentant :
- un élément de mélange (110)
- comportant un premier raccord d'alimentation (111) dans une conduite d'alimentation en milieu principale (MZ1) pour l'alimentation en milieu gazeux (M1), permettant de le faire passer à travers l'élément de mélange (110), et
- un second raccord d'alimentation (112) dans une conduite d'alimentation en milieu dérivée (MZ2) pour l'alimentation en milieu liquide (M2) transversalement au passage dans l'élément de mélange (110), et
- un raccord de distribution (113) pour la distribution du milieu gazeux (M1) et/ou du mélange de milieux (MG),
- une chambre de pression (240) au niveau de la conduite d'alimentation en milieu principale (MZ1),
- une soupape de commutation (120) est disposée dans la conduite d'alimentation en milieu principale (MZ1) et est conçue pour empêcher un passage du milieu gazeux (M1) à travers l'élément de mélange (110) dans un premier état de commutation (S1) et pour le permettre dans un second état de commutation (S2), dans lequel
- la soupape de commutation (120) est disposée dans la conduite d'alimentation en milieu principale (MZ1) en aval de la chambre de pression (240) et/ou au niveau de celle-ci, et la soupape de commutation (120) est formée en tant que soupape à 3/2 voies ou en tant que soupape antiretour double,
**caractérisé en ce que**
la soupape de commutation (120) est réalisée en tant que soupape de pontage, comportant un raccord de pontage (122) pour le pontage de l'élément de mélange (110), dans lequel le raccord de pontage (122) est directement raccordé au raccord de distribution (113).

2. Dispositif de nettoyage (100) selon la revendication 1,
**caractérisé en ce que**
- un appareil de régulation (220), à savoir un appareil de dosage et/ou de commande (220), est disposé dans la conduite d'alimentation en milieu dérivée (MZ2) et est conçu pour réguler une alimentation en milieu liquide (M2), en particulier indépendamment de la soupape de commutation (120), dans lequel
- pour un second état de commutation (S2) de la soupape de commutation (120) dans la conduite d'alimentation en milieu principale (MZ1), dans lequel un passage du milieu gazeux (M1) à travers l'élément de mélange (110) est autorisé :
- l'appareil de régulation (220) dans la conduite d'alimentation en milieu dérivée (MZ2) empêche, dans un premier état, une alimentation en milieu liquide (M2), dans lequel
- le milieu gazeux (M1) est en attente au niveau du raccord de distribution (113) de telle sorte que celui-ci peut être sollicité exclusivement par le milieu gazeux (M1), et
- l'appareil de régulation (220) dans la conduite d'alimentation en milieu dérivée (MZ2) permet, dans un second état, une alimentation en milieu liquide (M2), dans lequel
- le milieu gazeux (M1) est en attente au niveau du raccord de distribution (113) et le milieu liquide (M2) peut être aspiré au niveau du second raccord d'alimentation (112) afin de solliciter le raccord de distribution (113) avec le mélange de milieux (MG).

3. Dispositif de nettoyage (100) selon la revendication 1 ou 2,
**caractérisé en ce que** l'élément de mélange (110) est un élément de mélange à effet Venturi.

4. Dispositif de nettoyage (100) selon les revendications 1 à 3,
**caractérisé en ce que** le raccord de distribution (113) permettant de distribuer le milieu gazeux (M1) et/ou le mélange de milieux (MG) est le seul raccord de distribution (113).

5. Dispositif de nettoyage (100) selon l'une des revendications 1 à 4, **caractérisé en ce que** la soupape de commutation (120) est disposée dans la conduite d'alimentation en milieu principale (MZ1), entre une première source de milieu (MQ1) et le premier raccord d'alimentation (111) de l'élément de mélange (110).

6. Dispositif de nettoyage (100) selon l'une des revendications 1 à 5, **caractérisé en ce que** la soupape de commutation (120) est disposée dans la conduite d'alimentation en milieu principale (MZ1), en aval d'une soupape de limitation de pression (DBV).

7. Dispositif de nettoyage (100) selon la revendication 6,
**caractérisé en ce qu'**une soupape de purge de pression (DEV), en particulier sous la forme d'une soupape à 3/2 voies, est disposée entre la soupape de limitation de pression (DBV) et la soupape de commutation (120).

8. Dispositif de nettoyage (100) selon l'une des revendications 1 à 7, **caractérisé en ce que** l'appareil de régulation (220) dans la conduite d'alimentation en milieu dérivée (MZ2) est réalisé en tant qu'appareil de dosage et de commande qui dose et commande le milieu liquide (M2)
- avec un appareil de commande (221), en particulier sous la forme d'un étranglement, éventuellement réglable, et un appareil de dosage (222), en particulier sous la forme d'un réservoir intermédiaire, et/ou
- avec une soupape à 2/2 voies.

9. Dispositif de nettoyage (100) selon l'une des revendications 1 à 8,
**caractérisé en ce que** la chambre de pression (240) est raccordée directement à un raccord de chambre de pression (243) de la soupape de commutation (120), en particulier une soupape antiretour double (242) ou une soupape à 3/2 voies (241).

10. Dispositif de nettoyage (100) selon l'une des revendications 1 à 8,
**caractérisé en ce que** la chambre de pression (240) est raccordée, par l'intermédiaire d'une soupape de raccord de chambre de pression (241, 242), à un raccord de source de milieu (MQA) de la soupape de commutation (120), en particulier de la soupape de commutation (120) sous la forme d'une soupape à 3/2 voies.

11. Dispositif de nettoyage (100) selon l'une des revendications 1 à 10,
**caractérisé en ce que,** par l'intermédiaire de la conduite d'alimentation en milieu principale (MZ1), la première source de milieu (MQ1) est raccordée à un raccord de source de milieu (244) de la soupape de raccord de chambre de pression (241, 242) et/ou est raccordée à un raccord de source de milieu (MQA) de la soupape de commutation (120).

12. Dispositif de nettoyage (100) selon l'une des revendications 1 à 10,
**caractérisé en ce que** la soupape de commutation (120) est réalisée en tant que soupape électromagnétique (MV) dans la conduite d'alimentation en milieu principale (MZ1), à savoir en tant que soupape à 3/2 voies ou soupape antiretour double, dans lequel la soupape à 3/2 voies ou la soupape antiretour double présentent respectivement un raccord de source de milieu (MQA) et un raccord d'élément de mélange (121) dans la conduite d'alimentation en milieu principale (MZ1).

13. Dispositif de nettoyage (100) selon l'une des revendications 1 à 12,
**caractérisé en ce que** la composition et la succession de la séquence de milieux (MS) peuvent être commandées dans le temps, en particulier de manière sélective et/ou intermittente.

14. Dispositif de nettoyage (100) selon l'une des des revendications 1 à 13,
**caractérisé en ce que** le milieu gazeux (M1), en particulier l'air comprimé (DL), et/ou le mélange de milieux (MG) constitué du milieu gazeux (M1) et du milieu liquide (M2), en particulier l'eau, peuvent être distribués par impulsion.

15. Dispositif de nettoyage (100) selon l'une des des revendications 1 à 14,
**caractérisé en ce qu'**un appareil de chauffage (130) est réalisé dans la conduite d'alimentation en milieu dérivée (MZ2) pour chauffer le le milieu liquide (M2) par rapport à une température ambiante (T_{UG}).

16. Dispositif de nettoyage (100) selon l'une des revendications 1 à 15,
**caractérisé par** un appareil supplémentaire (140) au moyen duquel au moins le milieu liquide (M2) peut être mélangé avec un agent de nettoyage (RM), en particulier un liquide de nettoyage (RF).

17. Dispositif de nettoyage (100) selon l'une des revendications 1 à 16,
**caractérisé en ce que**
- pour un premier état de commutation (S1) de la soupape de commutation (120) dans la conduite d'alimentation en milieu principale (MZ1), dans lequel un passage du milieu gazeux (M1) à travers l'élément de mélange (110) est empêché, l'appareil de régulation (220) dans la conduite d'alimentation en milieu dérivée (MZ2) empêche, dans un premier état, une alimentation en milieu liquide (M2).

18. Système à air comprimé (200) permettant de nettoyer une surface (O), présentant :
- au moins un capteur (210) d'un système de capteurs (510), dans lequel le capteur (210), en particulier un élément de recouvrement transparent (211) du capteur (210), présente une surface (O), et
- au moins un dispositif de nettoyage (100) selon l'une des revendications 1 à 17, dans lequel
- une première source de milieu (MQ1) du système à air comprimé (200) peut être reliée au raccord de source de milieu (MQA) de la soupape de commutation (120) par l'intermédiaire de la conduite d'alimentation en milieu principale (MZ1), et
- une seconde source de milieu (MQ2) du système à air comprimé (200) peut être reliée au raccord de source de milieu (224) de l'appareil de régulation (220) et/ou au second raccord d'alimentation (112) de l'élément de mélange (110) par l'intermédiaire de la conduite d'alimentation en milieu dérivée (MZ2), et
- au moins une buse de pulvérisation (230) peut être reliée au raccord de distribution (113) par l'intermédiaire d'une conduite d'alimentation de buse de pulvérisation (SZ).

19. Système à air comprimé (200) selon la revendication 18,
**caractérisé en ce que** l'au moins une buse de pulvérisation (230) est réalisée avec une ouverture de sortie commune (AÖ) pour le milieu gazeux (M1) et le mélange de milieux (MG).

20. Système à air comprimé (200) selon la revendication 18 ou 19,
**caractérisé en ce que**
- la première source de milieu (MQ1) est réalisée en tant que source d'air comprimé, en particulier en tant que compresseur (K), et la seconde source de milieu (MQ2) est réalisée en tant que réservoir de fluide (FT), en particulier en tant que réservoir d'eau (WT), et/ou
- la seconde source de milieu (MQ2), en particulier le réservoir d'eau (WT), est disposée en dessous de l'élément de mélange (110).

21. Système à air comprimé (200) selon l'une des revendications 18 à 20,
**caractérisé en ce que**
- la première source de milieu (MQ1) sert à un autre but primaire, en particulier à l'approvisionnement d'une installation de suspension pneumatique (LFA) ou d'une installation pneumatique similaire (530), et/ou
- la seconde source de milieu (MQ2) sert à un autre but primaire, en particulier à l'approvisionnement d'une installation de nettoyage de vitres (520) ou d'une installation de nettoyage similaire (RA).

22. Système à air comprimé (200) selon l'une des revendications 18 à 21,
**caractérisé en ce que** le capteur (210) est un capteur optique (OS), en particulier un capteur de détection d'environnement (UES).

23. Procédé de nettoyage (300) permettant de nettoyer une surface (O), comportant un dispositif de nettoyage (100) selon l'une des revendications 1 à 17, en particulier un système à air comprimé (200) selon l'une des revendications 18 à 21.

24. Procédé de nettoyage (300) selon la revendication 23, présentant une ou plusieurs des étapes suivantes :
- commande (301) de la soupape de commutation (120) du système à air comprimé (200) et conduite de l'air comprimé (DL) au choix à partir de la première source de milieu (MQ1) ou de la chambre de pression (240),
- mise en fonctionnement (302) de la soupape de commutation (120) du dispositif de nettoyage (100) dans le premier état de commutation (S1), dans lequel un passage du milieu gazeux (M1) à travers l'élément de mélange (110) est empêché, et dans lequel l'appareil de régulation (220) dans la conduite d'alimentation en milieu dérivée (MZ2) empêche, dans un premier état, une alimentation en milieu liquide (M2),
- sollicitation (303) du raccord de distribution (113) avec le milieu gazeux (M1) et conduite du milieu gazeux (M1) du raccord de distribution (113) vers l'au moins une buse de pulvérisation (230),
- sollicitation (304) de la surface (O), en particulier par impulsion, uniquement avec le milieu gazeux (M1).

25. Procédé de nettoyage (300) selon la revendication 23 ou 24, présentant une ou plusieurs des étapes suivantes :
- commutation sélective (305) de la soupape de commutation (120) du dispositif de nettoyage (100) dans le second état de commutation (S2), dans lequel un passage du milieu gazeux (M1) à travers l'élément de mélange (110) est permis, dans lequel l'appareil de régulation (220) dans la conduite d'alimentation en milieu dérivée (MZ2) permet, dans un second état, une alimentation en milieu liquide (M2),
- aspiration (306) du milieu liquide (M2) au niveau du second raccord d'alimentation (112) du dispositif de nettoyage (100) par le principe Venturi,
- mélange (307) du milieu gazeux et du milieu liquide (M1/M2) dans un élément de mélange à effet Venturi (110) pour former un mélange de milieux (MG),
- sollicitation (308) du raccord de distribution (113) avec le mélange de milieux (MG) et conduite du mélange de milieux (MG) du raccord de distribution (113) vers l'au moins une buse de pulvérisation (230),
- sollicitation (309) de la surface (O), en particulier par impulsion, avec le mélange de milieux (MG).

26. Procédé de nettoyage (300) selon l'une des revendications 23 à 25, présentant une ou plusieurs des étapes suivantes :
- commutation sélective (310) de la soupape de commutation (120) du dispositif de nettoyage (100) dans le premier état de commutation (S1),
- commande (311) de l'appareil de régulation (220), dans lequel l'appareil de régulation (220) dans la conduite d'alimentation en milieu dérivée (MZ2) empêche, dans un premier état, une alimentation en milieu liquide (M2) et/ou permet, dans un second état, une alimentation en milieu liquide (M2),

27. Procédé de nettoyage (300) selon l'une des revendications 23 à 26,
**caractérisé en ce que** le nettoyage d'une surface (O) s'effectue de manière commandée dans le temps, en particulier de manière alternative et/ou intermittente.

28. Système de commande (400) comportant un appareil de commande et/ou de réglage (410) réalisé pour commander les étapes du procédé de nettoyage (300) selon l'une des revendications 23 à 27.

29. Véhicule (500) comportant un système à air comprimé (200) selon l'une des revendications 18 à 22 et un système de commande (400) selon la revendication 28, dans lequel une installation pneumatique (530) est raccordée au système à air comprimé (200) pour l'approvisionnement de la première source de milieu (MQ1) en milieu gazeux (M1) et une installation de nettoyage de vitres (520) est raccordée au système à air comprimé (200) pour l'approvisionnement de la seconde source de milieu (MQ2) en milieu liquide (M2).
